# FASCICULE DE BREVET EUROPEEN

(11) **EP 3 819 047 B1**
(45) Date de publication et mention de la délivrance du brevet: **07.02.2024**
(21) Numéro de dépôt: 20205854.1
(22) Date de dépôt: 05.11.2020
(51) Int. Cl.: C22C 38/00, C22C 38/02, C22C 38/04, C22C 38/40, C22C 38/44, C22C 38/58, C22C 33/02, B33Y 10/00, B33Y 70/00, B22F 3/15

(54) **MATÉRIAU EN ACIER OPTIMISÉ**
OPTIMIERTES STAHLMATERIAL
OPTIMISED STEEL MATERIAL

(30) Priorité: 07.11.2019 FR 1912534
(43) Date de publication de la demande: 12.05.2021
(73) Titulaire: Commissariat à l'Energie Atomique et aux Energies Alternatives, 75015 Paris (FR)
(72) Inventeur: CHNIOUEL, Aziz, 84300 CAVAILLON (FR); MASKROT, Hicham, 91310 MONTLHERY (FR); LOMELLO, Fernando, 91190 GIF-SUR-YVETTE (FR); GIROUX, Pierre-François, 92160 ANTONY (FR); AUBRY, Pascal, 75002 PARIS (FR)
(74) Mandataire: Cabinet Nony

(56) Documents cités:
- US-A- 5 908 486
- O.O. SALMAN ET AL: "Effect of heat treatment on microstructure and mechanical properties of 316L steel synthesized by selective laser melting", MATERIALS SCIENCE AND ENGINEERING: A, vol. 748, 31 janvier 2019 (2019-01-31), pages 205-212, XP055735191, AMSTERDAM, NL ISSN: 0921-5093, DOI: 10.1016/j.msea.2019.01.110
- LINDSTEDT U ET AL: "MICROSTRUCTURE AND MECHANICAL BEHAVIOUR OF SINGLE PRESSED AND VACUUM SINTERED GAS AND WATER ATOMISED 316L STAINLESS STEEL POWDERS", POWDER METALLURGY, MANEY PUBLISHING, LONDON, GB, vol. 41, no. 4, 1 janvier 1998 (1998-01-01), pages 261-268, XP000791828, ISSN: 0032-5899
- KONG DECHENG ET AL: "Mechanical properties and corrosion behavior of selective laser melted 316L stainless steel after different heat treatment processes", JOURNAL OF MATERIALS SCIENCE & TECHNOLOGY, vol. 35, no. 7, 2 mars 2019 (2019-03-02), pages 1499-1507, XP085673818, ISSN: 1005-0302, DOI: 10.1016/J.JMST.2019.03.003
- YAN FUYAO ET AL: "Characterization of nano-scale oxides in austenitic stainless steel processed by powder bed fusion", SCRIPTA MATERIALIA, ELSEVIER, AMSTERDAM, NL, vol. 155, 22 juin 2018 (2018-06-22), pages 104-108, XP085431403, ISSN: 1359-6462, DOI: 10.1016/J.SCRIPTAMAT.2018.06.011

## Description

### DOMAINE TECHNIQUE

La présente divulgation appartient au domaine des alliages à base fer, en particulier les aciers bas carbone.

L'invention concerne plus particulièrement un matériau en acier optimisé.

### ARRIERE-PLAN TECHNIQUE

La norme NF E 67-001 définit la fabrication additive comme « l'ensemble des procédés permettant de fabriquer, couche par couche, par ajout de matière, un objet physique à partir d'un objet numérique ».

La fabrication additive est une technologie qui permet de concevoir des pièces par ajout de matière contrairement aux procédés « classiques » (usinage, forgeage, laminage, ...) qui se caractérisent par un retrait de matière (procédés soustractifs). Elle offre la possibilité d'élaborer des pièces avec des géométries complexes impossibles à réaliser avec les procédés conventionnels. En raison des possibilités qu'ils offrent d'un point de vue technique et économique, les procédés de fabrication additive sont en plein essor depuis les années 80. Ces procédés de mise en forme des matériaux innovants sont utilisés dans différents secteurs industriels notamment les milieux médicaux, aéronautiques et spatiaux.

Le principe de la fabrication additive (également appelée « impression 3D ») est ainsi celui d'un processus de fabrication génératif se résumant à deux étapes réitérées jusqu'à l'obtention du produit fini massif :
1) Génération d'une couche de matière suivant un contour et une épaisseur fixés. La matière est déposée uniquement là où elle est nécessaire ;
2) Réalisation de la nouvelle couche par addition de matière au-dessus de la couche précédente. La fabrication peut se résumer à une fabrication dite "en escalier".

Parmi les nombreux procédés de fabrication additive, le procédé de fusion laser sélective sur lit de poudre (SLM) est l'un des plus répandu et utilisé pour l'élaboration de pièces métalliques.

Un acier élaboré par un procédé de fabrication additive, telle que par exemple une fusion laser sélective sur lit de poudre, possède une structure austénitique cubique à faces centrées.

Sa microstructure est hétérogène, mais aussi hiérarchique selon que l'on considère une échelle macro, micrométrique ou nanométrique.

Ainsi, une anisotropie microstructurale apparaît selon le plan d'observation : deux plans d'observation (le long de la direction de construction (//Z) et le long de l'axe XY perpendiculaire à la direction de construction (⊥Z)) sont ainsi nécessaires pour décrire la microstructure de l'acier élaboré par fusion laser sélective sur lit de poudre comme cela est illustré ci-après.

Cette microstructure diffère ainsi de celle obtenue par des procédés conventionnels de fabrication, tels que les procédés de forgeage qui aboutissent à un acier forgé.

En outre, soumis à une température élevée, des modifications microstructurales notables de l'acier obtenu par fabrication additive débutent à partir de 900 °C. A partir de cette température, la sous-structure cellulaire est telle que les cellules qui la composent grossissent jusqu'à disparaître complètement pour une température supérieure à 950/1000°C. La taille des grains augmente quant à elle notablement à partir de 1100 °C.

Par ailleurs, un traitement thermique (tel que par exemple une compression isostatique à chaud (CIC)) provoque des modifications microstructurales significatives sur l'acier élaboré par fusion laser sélective sur lit de poudre. A titre d'exemple, les grains des aciers 316 L obtenus sont systématiquement équiaxes après un traitement CIC à 1150 °C pendant 4 heures sous une pression de 1000 Bars ou 1150 °C pendant 3 heures sous une pression de 1500 Bars, les grains équiaxes possédant des tailles moyennes comprises entre 70 µm et 150 um.

L'anisotropie microstructurale d'un matériau en acier de l'état de la technique obtenu par un procédé de fabrication additive est préjudiciable au bon comportement de ce matériau lorsqu'il est soumis à des contraintes thermiques et/ou mécaniques. Cette anisotropie peut être partiellement réduite après avoir appliqué un traitement thermique au matériau en acier, ce qui a néanmoins pour inconvénient de provoquer une augmentation de la taille de grains du matériau en acier qui est à son tour préjudiciable à sa résistance aux contraintes thermiques et/ou mécaniques.

0.0. Salman et al., "Effect of heat treatment on microstructure and mechanical properties of 316L steel synthesized by sélective laser melting", MATERIALS SCIENCE & ENGINEERING A, Vol. 748, 31.01.2019, pages 205-212, XP055735191 divulgue l' influence du recuit a différentes températures (573, 873, 1273, 1373 et 1673 K) sur la stabilité des phases, la composition et la microstructure de l'acier inoxydable 316L fabrique par SLM.

### EXPOSE DE L'INVENTION

Un des buts de l'invention est donc d'éviter ou d'atténuer un ou plusieurs des inconvénients décrits cidessus, en particulier en fournissant un matériau en acier aux propriétés mécaniques optimisées, stables et isotropes, notamment afin que le matériau en acier puisse résister au mieux à des contraintes mécaniques et/ou thermiques.

La présente invention est définie dans les revendications annexées .

La présente divulgation concerne ainsi un procédé de fabrication d'un matériau en acier, dans lequel une poudre d'acier est soumise à un procédé de consolidation afin de former le matériau ou à un procédé de revêtement afin de revêtir un support avec un revêtement comprenant le matériau, la poudre étant formée de particules qui comprennent une matrice dans laquelle sont incorporés des précipités, la composition chimique de la poudre étant telle que :
i) la poudre comprend en pourcentage en poids les éléments suivants :
   - 16 % à 20 % de chrome,
   - 8 % à 14 % de nickel,
   - 0,001 % à 0,030 % de carbone,
   - 0,001 % à 0,050 % d'oxygène,
   - 0 % à 2 % de manganèse,
   - 0 % à 3 % de molybdène,
   - 0 % à 1 % de silicium,
   - le reste de ces éléments étant constitué de fer ;
ii) les précipités comprenant au moins un élément métallique choisi parmi un élément métallique M, un élément métallique M', un élément métallique M' ' ou leurs mélanges ; les éléments métalliques étant choisis indépendamment l'un de l'autre parmi l'yttrium, le titane, le fer, le chrome, le tungstène, le silicium, le zirconium, le thorium, le magnésium, le manganèse, l'aluminium, l'hafnium, le molybdène ou leurs mélanges ;
la microstructure de l'acier étant telle que les grains sont équiaxes et la taille moyenne des grains étant telle que la moyenne de leur plus grande dimension "Dmax" et/ou la moyenne de leur plus petite dimension "Dmin" est comprise entre 10 µm et 50 um, préférentiellement 10 µm et 30 µm.

Les inventeurs ont identifié une poudre d'acier particulière, qui soumise à un procédé de consolidation aboutit à un matériau en acier aux caractéristiques microstructurales optimisées afin de résister à des contraintes mécaniques et/ou thermiques.

La poudre d'acier peut être obtenue classiquement par atomisation gazeuse sous azote ou argon, mais également obtenue par atomisation par eau notamment si la poudre est traitée ensuite par un procédé de fusion laser sélective sur lit de poudre (SLM).

L'expression "le reste de ces éléments" signifie que c'est la somme des éléments chimiques explicitement mentionnés qui totalise 100 % dans la poudre d'acier ou dans le matériau en acier de l'invention.

La composition élémentaire des précipités peut être déterminée par analyse par spectroscopie à rayons X par dispersion d'énergie (dite EDX) réalisée au Microscope Électronique à Balayage (MEB).

De manière générale, le matériau en acier obtenu à l'issue du procédé de fabrication est tel que défini dans la présente description, notamment selon une ou plusieurs des variantes décrites pour ce matériau, telles que par exemple la microstructure et/ou la composition du matériau. Sauf mention contraire, toute caractéristique des précipités ou de la matrice contenus dans la poudre d'acier soumise au procédé de fabrication est par exemple identique à la caractéristique correspondante des précipités ou de la matrice contenus dans le matériau en acier de l'invention, cette caractéristique étant décrite plus en détail dans la description du matériau en acier. Plus particulièrement, sauf mention contraire, la taille, la répartition dans la matrice des précipités, ou la composition chimique des précipités ou de la matrice ne sont pas modifiées entre la poudre en acier et le matériau en acier de l'invention.

Concernant plus particulièrement la poudre d'acier, les particules de la poudre peuvent avoir un diamètre médian (d₅₀) compris entre 10 µm et 200 um. Le diamètre médian (d₅₀) d'une poudre est la taille pour laquelle 50 % de la population des particules composant cette poudre a une taille inférieure à d₅₀. Il peut être déterminé par une technique telle que la méthode de diffraction laser via un granulomètre décrite par exemple dans la norme ISO 13320 (édition 2009-12-01).

La densité apparente de la poudre mesurée par la norme ASTM B-212 peut être comprise entre 3,5 g/cm³ et 4,5 g/cm³.

La densité réelle de la poudre peut être comprise entre 7,95 g/cm³ et 8,05 g/cm³. Elle est par exemple mesurée avec un pycnomètre.

Le procédé de consolidation utilisé dans le procédé de fabrication est un procédé de fabrication additive.

Comme indiqué précédemment, un procédé de fabrication additive comprend deux étapes réitérées jusqu'à l'obtention du matériau fini massif :
1. Génération d'une couche de matière suivant un contour et une épaisseur fixés.
2. Réalisation de la nouvelle couche par addition de matière au-dessus de la couche précédente.

À l'issue du procédé de fabrication additive, les couches successives de matière formant le matériau sont empilées selon une direction perpendiculaire au plateau de l'imprimante 3D sur lequel a été déposée la première couche de matière.

La fabrication additive est décrite plus en détail par exemple dans les documents suivants qui sont intégrés par référence à la présente description :
- F. Laverne et al., "Fabrication additive - Principes généraux", Techniques de l'ingénieur, Fascicule BM7017 V2 (publication du 10 février 2016).
- H. Fayazfara et al., "critical review of powderbased additive manufacturing of ferrous alloys: Process parameters, microstructure and mechanical properties", Materials & Design, Volume 144, 2018, Pages 98-128.
- T.DebRoy et al., "Additive manufacturing of metallic components - Process, structure and properties", Progress in Materials Science, Volume 92, 2018, pages 112-224.
- Ministère de l'économie et des finances, République Française, "Prospective - futur de la fabrication additive - rapport final", édition de janvier 2017, ISBN : 978-2-11-151552-9 ; en particulier l'Annexe 2 (pages 205 à 220) notamment lorsqu'il décrit les procédés de fabrication additive utilisant une poudre métallique (annexe 2, Les procédés de fabrication, paragraphes 3, 4 et 5).

Plus particulièrement, le procédé de fabrication additive peut être choisi parmi un procédé de fusion sélective par laser sur lit de poudre, de fusion sélective par faisceau d'électrons sur lit de poudre, de frittage sélectif par laser sur lit de poudre, de projection laser ou de projection de liant.

Le procédé de fusion sélective par laser (SLM) est par exemple réalisé selon un ou plusieurs des paramètres suivants :
- le faisceau laser balaye la poudre d'acier selon une vitesse de balayage comprise entre 50 mm/seconde (matériau dense) et 3000 mm/seconde (matériau poreux) ;
- puissance du faisceau laser : 50 W à 1000 W ;
- distance entre espace vecteur : 25 µm à 150 µm ;
- épaisseur de couche : 15 µm à 80 um.

Le procédé de fusion sélective par faisceau d'électrons sur lit de poudre (dit EBM d'après l'acronyme anglais pour " Electron Beam Melting") est par exemple réalisé selon un ou plusieurs des paramètres suivants :
- puissance du faisceau d'électrons : 50 W à 4000 W ;
- vitesse du faisceau d'électrons : 100 mm/s à 10 000 mm/s ;
- distance entre espace vecteur : 50 um à 150 µm ;
- épaisseur de la couche : 40 µm à 75 um.

Le procédé de projection laser est par exemple réalisé selon un ou plusieurs des paramètres suivants :
- puissance du laser : 400 W à 3 000 W ;
- vitesse de déplacement de la buse : 150 mm/min à 1200 mm/min ;
- débit de la poudre : 4 g/min à 15 g/min.

Le procédé de projection thermique est par exemple choisi parmi un procédé de projection thermique flamme, un procédé de projection arc électrique entre deux fils ou un procédé de projection plasma soufflé.

À l'issue du procédé de fabrication dans lequel la poudre d'acier est soumise à un procédé de consolidation, le matériau se trouve plus particulièrement sous forme massive.

Lorsque le procédé de consolidation est effectué dans un moule, une pièce massive constituée du matériau est obtenue.

La présente divulgation concerne également le matériau en acier obtenu ou susceptible d'être obtenu par le procédé de fabrication.

La présente invention concerne un matériau en acier comme définie dans les revendications annexées.

La taille moyenne des grains du matériau est mesurée par la méthode des interstices, telle que décrite par exemple dans :
- "https://en.wikipedia.org/wiki/Intercept_method",
- la norme ASTM E112-10 décrite par exemple dans le document "fushunspecialsteel.com/wp-content/uploads/2015/09/ASTM-E112-2010-Standard-Test-Methods-for-Determining-Average-Grain-Size.pdf".

Les grains peuvent être équiaxes dans un plan parallèle au plan des couches superposées du matériau qui résultent de la fabrication du matériau par un procédé de fabrication additive. En plus du plan parallèle, les grains peuvent en outre être équiaxes dans un plan perpendiculaire au plan des couches superposées du matériau qui résultent de la fabrication du matériau par un procédé fabrication additive.

L'interface entre ces couches superposées, et donc la direction de ces couches, est généralement visible par Microscopie Électronique à Balayage (MEB) ou par microscopie optique.

Préférentiellement, les grains équiaxes sont tels que le rapport moyen Dmax/Dmin entre la plus grande dimension "Dmax" et la plus petite dimension "Dmin" d'un grain est compris entre 1 et 2 (plus particulièrement compris entre 1 et 1,5).

Le rapport moyen Dmax/Dmin est par exemple calculé en faisant la moyenne du rapport Dmax/Dmin sur au moins 10 (voire au moins 50) grains observés par imagerie Microscopie Électronique à Balayage (MEB).

Le matériau peut avoir une densité relative comprise entre 70,0 % et 99,9 %. La densité relative permet d'apprécier la porosité du matériau. Elle est mesurée par exemple par la méthode d'Archimède.

Concernant la composition des précipités contenus dans le matériau en acier de l'invention ou dans la poudre d'acier utilisée dans le procédé de fabrication, les précipités peuvent comprendre au moins un oxyde métallique, au moins un carbure métallique, au moins un oxycarbure métallique, au moins un composé intermétallique, ou leurs mélanges. Chacun de cet oxyde, carbure, oxycarbure ou composé intermétallique comprend au moins un élément métallique choisi parmi l'élément métallique M, l'élément métallique M', l'élément métallique M'' ou leurs mélanges ; plus particulièrement comprenant l'élément métallique M (plus particulièrement le titane, le fer, le chrome ou leurs mélanges), éventuellement l'élément métallique M' avec éventuellement l'élément métallique M'', ou le mélange de ces éléments métalliques.

Le matériau de l'invention ou la poudre d'acier utilisée dans le procédé de fabrication peut comprendre 0 % à 1,5 % en poids de l'oxyde métallique (plus particulièrement 0,1 % à 1,5 %).

L'oxyde métallique contenu dans les précipités du matériau en acier de l'invention ou dans la poudre d'acier utilisée dans le procédé de fabrication est choisi parmi au moins un oxyde simple, au moins un oxyde mixte ou leurs mélanges.

L'oxyde métallique est plus particulièrement choisi parmi au moins un oxyde simple MO₂₋ₓ avec l'indice X compris entre 0 et 1, au moins un oxyde mixte MM'_{y'}O_{5-x'} avec l'indice X' différent de 5 compris entre 0 et 5 et l'indice y' non nul compris entre 0 et 2, ou au moins un oxyde mixte MM'_{y'}M"_{y"}O_{5-x"} avec l'indice X'' différent de 5 compris entre 0 et 5, l'indice y' non nul compris entre 0 et 2 et l'indice y' ' compris entre 0 et 2, ou les mélanges de ces oxydes.

Par exemple, l'indice "x" est le suivant pour différents composés :
- X = 0 : TiO2
- X = 1 : Fe0
- X = 0,5 : Fe2O3
- X = 2/3 : Fe3O4

L'indice "y'" est par exemple égal à 0, 1 ou 2.

L'élément métallique M contenu dans l'oxyde simple MO2-x, l'oxyde mixte MM'y'O5-x' ou l'oxyde mixte MM'y'M"y"O5-x" est plus particulièrement choisi parmi l'yttrium, le fer, le chrome, le titane, l'aluminium, l'hafnium, le silicium, le zirconium, le thorium, le magnésium ou le manganèse.

L'élément métallique M contenu dans l'oxyde métallique (en particulier l'oxyde simple MO2-x) est plus particulièrement choisi parmi le titane, le fer ou le chrome.

L'oxyde simple MO₂₋ₓ est par exemple choisi parmi Y2O3, Fe2O3, Fe0, Fe3O4, Cr2O3, TiO2, Al2O3, HfO2, SiO2, ZrO2, ThO2, MgO, MnO, MnO2 ou leurs mélanges. Plus particulièrement, l'oxyde simple est TiO2.

L'élément métallique M contenu dans l'oxyde mixte MM'y'O5-x' est par exemple choisi parmi le fer ou l'yttrium.

L'élément métallique M' contenu dans l'oxyde mixte MM'y'O5-x' ou l'oxyde mixte MM'y'M"y"O5-x" est plus particulièrement choisi parmi le titane ou l'yttrium.

L'oxyde mixte MM'y'O5-x' est par exemple choisi parmi FeTiO3, Y2Ti2O7, YTi2O5 ou leurs mélanges. Plus particulièrement, l'oxyde mixte est TiYO5-x'.

L'oxyde mixte MM'y'O5-x' peut être un composé pyrochlore, par exemple Y2Ti2O7 ou YTi2O5 ou leur mélange.

L'oxyde mixte MM'y'M"y"O5-x" est par exemple de formule générale de type "SiOAlMn" notée sans indice stœchiométrique.

Les précipités contenus dans le matériau en acier de l'invention ou dans la poudre d'acier utilisée dans le procédé de fabrication peuvent également comprendre au moins un carbure métallique choisi par exemple parmi au moins un carbure simple ou un carbure mixte.

Plus particulièrement, le carbure métallique est choisi par exemple parmi un au moins un carbure simple MC₈₋ₓ avec l'indice X différent de 8 compris entre 0 et 8, au moins un carbure mixte MM'_{y'}C_{8-x'} avec l'indice X' différent de 8 compris entre 0 et 8 et l'indice y' compris entre 0 et 5, ou les mélanges de ces carbures.

Le matériau ou la poudre d'acier utilisée dans le procédé de fabrication peut comprendre 0 % à 0,9 % (voire 0,1 % à 0,9 %) en poids du carbure métallique.

L'élément métallique M contenu dans le carbure simple MC₈₋ₓ ou le carbure mixte MM'_{y'}C_{8-x'} est par exemple choisi parmi le fer, le titane, le chrome, l'aluminium, le tungstène ou le silicium.

Le carbure simple MC₈₋ₓ est par exemple choisi parmi TiC, SiC, AlCs, CrC ou leurs mélanges.

L'élément métallique M' contenu dans le carbure mixte MM'_{y'}C_{8-x'} est par exemple choisi parmi le fer, le titane, le chrome, l'aluminium, le tungstène ou le silicium.

Le carbure mixte MM'_{y'}C_{8-x'} est par exemple choisi parmi (FeCr)₇C₃ ou (FeCr)₂₃C₆.

Les précipités contenus dans le matériau en acier de l'invention ou dans la poudre d'acier utilisée dans le procédé de fabrication peuvent comprendre au moins un oxycarbure métallique comprenant l'élément métallique M, l'élément métallique M', l'élément métallique M'' ou leurs mélanges.

Le matériau ou la poudre d'acier utilisée dans un procédé de fabrication peut comprendre 0 % à 1,5 % en poids de l'oxycarbure métallique (plus particulièrement 0,1 % à 1,5 %).

L'oxyde métallique et le carbure métallique peuvent coexister dans les précipités du matériau ou de la poudre d'acier utilisée dans le procédé de fabrication.

L'oxycarbure métallique qui peut en résulter peut plus particulièrement comprendre un oxyde métallique et un carbure métallique qui présentent une composition telle que définie précédemment.

Plus particulièrement, les précipités de carbure et/ou d'oxycarbure peuvent être localisés aux joints des grains formant les particules de la poudre d'acier ou aux joints des grains composant le matériau en acier, ces précipités ayant une taille moyenne comprise entre 10 nm et 100 nm, voire entre 10 nm et 50 nm.

Les précipités contenus dans le matériau en acier de l'invention ou dans la poudre d'acier utilisée dans le procédé de fabrication peuvent également comprendre au moins un composé intermétallique comprenant l'élément métallique M, l'élément métallique M' voire éventuellement l'élément métallique M''.

Le matériau ou la poudre d'acier utilisée dans le procédé de fabrication peut comprendre 0 % à 2 % en poids du composé intermétallique (plus particulièrement 0,1 % à 1,5 %).

L'élément métallique M contenu dans le composé intermétallique est par exemple le fer.

L'élément métallique M' contenu dans le composé intermétallique est par exemple le titane ou l'yttrium.

L'élément métallique M'' contenu dans le composé intermétallique est par exemple le chrome ou le tungstène.

Le composé intermétallique est par exemple choisi parmi YFe₃, Fe₂Ti, FeCrWTi ou leurs mélanges. FeCrWTi est une appellation connue de l'homme de métier, mais ne correspond pas à une véritable formule stœchiométrique.

Les précipités incorporés dans la matrice peuvent également présenter les caractéristiques suivantes pour le matériau en acier de l'invention ou la poudre d'acier utilisée dans le procédé de fabrication.

Les précipités contenus dans le matériau en acier ou dans la poudre d'acier utilisée dans le procédé de fabrication peuvent avoir une taille moyenne comprise entre 5 nm et 200 nm, préférentiellement entre 5 nm et 100 nm, encore plus préférentiellement entre 5 nm et 70 nm.

La taille moyenne des précipités peut être déterminée visuellement à partir d'une mesure faite sur une image obtenue avec un Microscope Électronique à Balayage (MEB), pour être ensuite traitée avec un logiciel de traitement d'image tel que par exemple logiciel "ImageJ" disponible à l'adresse Internet suivante : https://imagej.net/Welcome.

Les précipités du carbure métallique peuvent avoir une taille moyenne comprise entre 10 nm et 50 nm.

Les précipités de l'oxyde métallique et/ou de l'oxycarbure métallique peuvent avoir une taille moyenne comprise entre 10 nm et 100 nm, plus particulièrement entre 20 nm et 70 nm.

Le matériau en acier de l'invention ou la poudre d'acier utilisée dans le procédé de fabrication peut comprendre 0,1 % à 1,5 % en poids de précipités. Cette teneur en précipités peut par exemple être mesurée par dissolution sélective avec de l'eau régale.

La densité moyenne avec laquelle les précipités se répartissent dans la matrice sont comprise entre 2 précipités/µm³ et 100 précipités/µm³.

Elle est par exemple déterminée par comptage via une imagerie, tel que par exemple une imagerie par Microscopie Electronique à Balayage (MEB) ou par Microscopie Electronique à Transmission (MET).

Outre les éléments chimiques précédemment cités, le matériau ou la poudre d'acier utilisée dans le procédé de fabrication peut comprendre en pourcentage en poids, au moins un des éléments suivants :
- 0 % à 0,11 % d'azote,
- 0 % à 0,045 % de phosphore,
- 0 % à 0,05 % de soufre,
- 0 % à 0,0300 % d'aluminium,
- 0 % à 2 % de manganèse,
- 0 % à 3 % de molybdène,
- 0 % à 0,003 % de vanadium.

Outre les éléments chimiques précédemment cités, notamment au paragraphe précédent, le matériau ou la poudre d'acier utilisée dans le procédé de fabrication peut encore comprendre en pourcentage en poids, au moins un des éléments suivants :
- 0 % à 0,02 % de cobalt,
- 0 % à 0,02 % de titane,
- 0 % à 0,02 % de cuivre.

Ces éléments chimiques supplémentaires peuvent être présents dans la matrice et/ou dans les précipités.

La matrice peut comprendre, en proportion en poids par rapport au poids du matériau ou par rapport au poids de la poudre d'acier utilisée dans le procédé de fabrication, 0 ppm à 500 ppm de l'élément métallique M, de l'élément métallique M' et/ou de l'élément métallique M''. Il s'agit d'élément métallique dissous dans la matrice, en opposition à celui présent dans les précipités.

L'élément métallique M, M' ou M'' contenu dans la matrice peut être plus particulièrement choisi parmi l'yttrium, le titane, le tungstène, le zirconium, le thorium, l'aluminium, l'hafnium, le silicium, le manganèse ou le molybdène.

Le matériau ou la poudre d'acier utilisée dans le procédé de fabrication peut être de structure austénitique.

La matrice (et donc par extension le matériau en acier de l'invention ou la poudre d'acier utilisée dans le procédé de fabrication) peut avoir la composition chimique d'un acier de type 316 L ou 304 L, par exemple telle que spécifiée dans la norme ASTM A666.

La microstructure du matériau peut être telle que les grains qui la composent présentent une structure cellulaire. Cette sous-structure cellulaire est par exemple illustrée dans le document "Techniques de l'ingénieur - fascicule M140v3 : Mécanismes de fluage. Effet de la microstructure du matériau Essais de fluage - Auteur(s) : François SAINT-ANTONIN - Date de publication : 10 juillet 1995"

Les grains de structure cellulaire sont par exemple composés de cellules de taille moyenne comprise entre 300 nm et 2 um.

Concernant les propriétés mécaniques du matériau en acier de l'invention, elles présentent généralement au moins une des valeurs suivantes :
- allongement à la rupture "A" de 35 % à 85 %, et/ou
- limite d'élasticité "Rp0,2" de 190 Mpa à 700 MPa, et/ou
- résistance maximale à la traction "Rm" de 400 MPa à 900 MPa.

La présente divulgation concerne également un procédé de traitement dans lequel un matériau en acier est soumis à une compression isostatique à chaud, le matériau étant tel que les grains qui le composent comprennent une matrice dans laquelle sont incorporés des précipités et tel que :
i) le matériau comprend, en pourcentage en poids, les éléments suivants :
   - 16 % à 20 % de chrome,
   - 8 % à 14 % de nickel,
   - 0,001 % à 0,030 % de carbone,
   - 0,001 % à 0,050 % d'oxygène,
   - 0 % à 2 % de manganèse,
   - 0 % à 3 % de molybdène,
   - 0 % à 1 % de silicium,
   - le reste de ces éléments étant constitué de fer ;
ii) les précipités comprenant au moins un élément métallique choisi parmi un élément métallique M, un élément métallique M', un élément métallique M' ' ou leurs mélanges ; les éléments métalliques étant choisis indépendamment l'un de l'autre parmi l'yttrium, le titane, le fer, le chrome, le tungstène, le silicium, le zirconium, le thorium, le magnésium, le manganèse, l'aluminium, l'hafnium, le molybdène ou leurs mélanges ;
la microstructure de l'acier étant telle que les grains sont équiaxes et la taille moyenne des grains étant telle que la moyenne de leur plus grande dimension "Dmax" et/ou la moyenne de leur plus petite dimension "Dmin" est comprise entre 10 µm et 50 µm.

La compression isostatique à chaud peut comprendre les étapes successives suivantes réalisées dans une enceinte comprenant une atmosphère gazeuse inerte sous une pression comprise entre 120 bars et 1800 bars :
- a) le matériau est porté à une température constante comprise entre 600 °C et 1400 °C selon une vitesse de montée en température comprise entre 500 °C/heure et 1000 °C/heure ;
- b) la température constante est maintenue pendant une durée comprise entre 15 minutes et 5 heures ;
- c) la température constante est diminuée selon une vitesse de descente en température comprise entre 500 °C/heure et 1000 °C/heure afin d'atteindre la température ambiante.

La température ambiante est typiquement de 25 °C.

L'atmosphère gazeuse inerte (à savoir inerte chimiquement vis-à-vis du matériau tel qu'il se présente en début et fin du procédé de traitement) peut comprendre un gaz choisi par exemple parmi l'argon, l'hélium ou leur mélange.

De manière générale, le matériau en acier soumis au traitement du procédé de fabrication est tel que défini dans la présente description, notamment selon une ou plusieurs des variantes décrites pour ce matériau, telles que par exemple la microstructure et/ou la composition du matériau.

La présente divulgation concerne également une pièce composée en tout ou partie d'un matériau en acier dont les grains qui le composent comprennent une matrice dans laquelle sont incorporés des précipités et tel que :
i) le matériau comprend, en pourcentage en poids, les éléments suivants :
   - 16 % à 20 % de chrome,
   - 8 % à 14 % de nickel,
   - 0,001 % à 0,030 % de carbone,
   - 0,001 % à 0,050 % d'oxygène,
   - 0 % à 2 % de manganèse,
   - 0 % à 3 % de molybdène,
   - 0 % à 1 % de silicium,
   - le reste de ces éléments étant constitué de fer
ii) les précipités comprenant au moins un élément métallique choisi parmi un élément métallique M, un élément métallique M', un élément métallique M' ' ou leurs mélanges ; les éléments métalliques étant choisis indépendamment l'un de l'autre parmi l'yttrium, le titane, le fer, le chrome, le tungstène, le silicium, le zirconium, le thorium, le magnésium, le manganèse, l'aluminium, l'hafnium, le molybdène ou leurs mélanges ;
la microstructure de l'acier étant telle que les grains sont équiaxes et la taille moyenne des grains étant telle que la moyenne de leur plus grande dimension "Dmax" et/ou la moyenne de leur plus petite dimension "Dmin" est comprise entre 10 µm et 50 um.

La pièce peut avoir une structure cellulaire ou une structure alvéolaire, telle que notamment décrite dans le document FR FR2932705A1 (en particulier les pièces illustrées des Figures 1 à 14 et telles que commentées dans la description de ce document) et/ou le mémoire de thèse "Développement d'une nouvelle technique d'élaboration de mousses d'acier par fonderie et caractérisation mécanique" de Jonathan Dairon (en particulier les pages 109 à 112) disponible à l'adresse https://tel.archives-ouvertes.fr/tel-00694478/document.

Plus particulièrement, la pièce a une structure de nid d'abeilles, une structure de treillis ou une structure de mousse.

La plus grande dimension de la cellule ou de l'alvéole formant respectivement la structure cellulaire ou la structure alvéolaire peut être comprise entre 1 nm à 1 cm ou entre 5 cm à 10 cm.

La pièce peut être un amortisseur.

De manière générale, le matériau en acier qui compose tout ou partie de la pièce est tel que défini dans la présente description, notamment selon une ou plusieurs des variantes décrites pour ce matériau, telles que par exemple la microstructure et/ou la composition du matériau.

La présente divulgation concerne également un procédé de fabrication d'une pièce telle que définie dans la présente description, notamment selon une ou plusieurs des variantes décrites pour cette pièce, telles que par exemple la structure (notamment la structure cellulaire ou alvéolaire, particulièrement une structure de nid d'abeilles, une structure de treillis ou une structure de mousse) et/ou la composition du matériau, voire du matériau obtenu après le procédé de traitement de l'invention.

Le procédé de fabrication d'une pièce est tel que la pièce est fabriquée par un procédé de fabrication additive.

Plus particulièrement, le procédé de fabrication additive est choisi parmi un procédé de fusion sélective par laser sur lit de poudre, de fusion sélective par faisceau d'électrons sur lit de poudre, de frittage sélectif par laser sur lit de poudre, de projection laser ou de projection de liant.

Le procédé de fabrication de la pièce peut être suivi d'un procédé de traitement comprenant une étape de compression isostatique à chaud.

Cette étape de compression isostatique à chaud peut comprendre les étapes successives suivantes réalisées dans une enceinte comprenant une atmosphère gazeuse inerte sous une pression comprise entre 120 bars et 1800 bars :
A. le matériau est porté à une température constante comprise entre 600 °C et 1400 °C selon une vitesse de montée en température comprise entre 500 °C/heure et 1000 °C/heure ;
B. la température constante est maintenue pendant une durée comprise entre 15 minutes et 5 heures ;
C. la température constante est diminuée selon une vitesse de descente en température comprise entre 500 °C/heure et 1000 °C/heure afin d'atteindre la température ambiante.

L'atmosphère gazeuse inerte peut comprendre un gaz choisi parmi l'argon, l'hélium ou leur mélange.

L'invention est avantageusement complétée par les caractéristiques suivantes, prises seules ou selon l'une quelconque de leurs combinaisons techniquement possibles.

### EXPOSE DETAILLE DE L'INVENTION

Dans la présente description de l'invention, un verbe tel que « comprendre », « incorporer », « inclure », « contenir » et ses formes conjuguées sont des termes ouverts et n'excluent donc pas la présence d'élément(s) et/ou étape(s) additionnels s'ajoutant aux élément(s) et/ou étape(s) initiaux énoncés après ces termes. Toutefois, ces termes ouverts visent en outre un mode de réalisation particulier dans lequel seul(s) le(s) élément(s) et/ou étape(s) initiaux, à l'exclusion de tout autre, sont visés ; auquel cas le terme ouvert vise en outre le terme fermé « consister en », « constituer », « composer de » et ses formes conjuguées.

L'usage de l'article indéfini « un » ou « une » pour un élément ou une étape n'exclut pas, sauf mention contraire, la présence d'une pluralité d'éléments ou étapes.

Tout signe de référence entre parenthèses dans les revendications ne saurait être interprété comme limitatif de la portée de l'invention.

Par ailleurs, sauf indication contraire :
- les valeurs aux bornes sont incluses dans les gammes de paramètres indiquées (sauf par exemple en cas d'exclusion explicite de la valeur d'une borne) ;
- sauf marge d'erreur indiquée, les marges d'incertitude pour les valeurs mentionnées sont telles que l'erreur maximale pour le dernier chiffre indiqué doit être estimée à partir de la convention relative à l'arrondi. Par exemple, pour une mesure de 3,5, la marge d'erreur est 3,45-3,54 ;
- les températures indiquées sont considérées pour une mise en oeuvre à pression atmosphérique ;
- tout pourcentage en poids d'une poudre ou d'un matériau se rapporte au poids total de cette poudre ou de ce matériau ;
- les indices mentionnés dans les formules des précipités métalliques (oxydes, carbures, oxycarbures et composés intermétalliques) sont des indices stœchiométriques, et non des indices en poids comme cela est parfois le cas parfois en métallurgie.

L'expression « selon une ou plusieurs des variantes décrites dans la présente description » pour une matière (notamment le matériau en acier de l'invention ou la poudre d'acier utilisé dans le procédé de fabrication) ou un élément, se réfère notamment aux variantes qui concernent la composition chimique et/ou la proportion des constituants de cette matière et de toute espèce chimique supplémentaire qu'il peut éventuellement contenir et notamment aux variantes qui concernent la composition chimique, la structure, la géométrie, l'agencement dans l'espace et/ou la composition chimique de cet élément ou d'un sous-élément constitutif de l'élément. Ces variantes sont par exemple celles indiquées dans les revendications.

D'autres objets, caractéristiques et avantages de l'invention vont maintenant être précisés dans la description qui suit de modes de réalisation particuliers de l'invention, donnés à titre illustratif et non limitatif, en référence aux Figures 1 à 20 annexées.

### BREVE DESCRIPTION DES FIGURES

[Fig 1] La Figure 1 représente un tableau indiquant des gammes de teneur massique globale des éléments chimiques composant la poudre en acier de l'invention, ainsi qu'à titre comparatif les teneurs correspondantes telles que définies par la norme ASTM A666.
[Fig 2] La Figure 2 représente un tableau précisant la teneur massique et atomique des éléments chimiques au sein de la matrice et au sein des précipités d'une poudre d'acier selon l'invention.
[Fig 3] La Figure 3 représente un tableau indiquant la teneur massique des éléments chimiques dans le matériau en acier de l'invention, au sein de la matrice, des précipités d'oxyde, des précipités de carbures et des précipités d'oxycarbures.
[Fig 4] et
[Fig 5] Les Figures 4 et 5 représentent des clichés obtenus par diffraction d'électrons rétrodiffusés d'un matériau en acier de l'invention, respectivement, selon un plan parallèle et un plan perpendiculaire à la direction z de fabrication additive du matériau.
[Fig 6] La Figure 6 est une figure de pôle du matériau acier de l'invention obtenue à partir de données collectées par diffraction d'électrons rétrodiffusés (EBSD).
[Fig 7] La Figure 7 est un cliché obtenu par Microscopie Électronique à Balayage (MEB) montrant les cellules présentes à l'intérieur du matériau acier de l'invention.
[Fig 8] La Figure 8 est une micrographie obtenue par Microscopie Electronique en Transmission (MET) sur lame mince du matériau en acier de l'invention.
[Fig 9] et
[Fig 10] Les Figures 9 et 10 représentent des clichés obtenus par diffraction d'électrons rétrodiffusés d'un matériau en acier soumis au procédé de traitement de l'invention, respectivement, selon un plan parallèle et un plan perpendiculaire à la direction z de fabrication additive du matériau.
[Fig 11] La Figure 11 est une figure de pôle du matériau acier soumis au procédé de traitement de l'invention obtenue à partir de données collectées par EBSD.
[Fig 12] La Figure 12 représente un graphique exprimant l'angle de désorientation exprimée en degrés en fonction de la fréquence exprimée en % pour le matériau en acier de l'invention avant ("brut") et après avoir subi le procédé de traitement de l'invention ("CIC").
[Fig 13] La Figure 13 représente un tableau indiquant la teneur massique globale des éléments chimiques d'une poudre d'acier de référence.
[Fig 14] La Figure 14 représente un tableau indiquant la teneur massique des éléments chimiques composant la matrice et les précipités d'une poudre d'acier de référence.
[Fig 15] et
[Fig 16] Les Figures 15 et 16 représentent des clichés obtenus par diffraction d'électrons rétrodiffusés d'un matériau en acier de référence, respectivement, selon un plan parallèle et un plan perpendiculaire à la direction z de fabrication additive du matériau.
[Fig 17] La Figure 17 représente un tableau indiquant la teneur massique des éléments chimiques composant un matériau d'acier de référence.
[Fig 18] La Figure 18 représente une figure de pôle d'un matériau acier de référence obtenue à partir de données collectées par EBSD.
[Fig 19] La Figure 19 représente un graphe indiquant pour un matériau en acier de référence et pour un matériau en acier de l'invention (matériaux bruts et après traitement(s)) : selon l'axe à gauche des ordonnées la taille moyenne des grains exprimée en um pour la plus grande dimension et la plus petite dimension des grains d'une part, et selon l'axe à droite des ordonnées le rapport entre ces deux dimensions d'autre part.
[Fig 20] La Figure 20 représente un tableau indiquant les propriétés mécaniques du matériau en acier de l'invention et d'un matériau en acier de référence (selon une direction parallèle et perpendiculaire à la direction z de fabrication additive du matériau), ainsi que l'anisotropie de ces propriétés.

### EXPOSE DE MODES DE REALISATION PARTICULIERS

### 1. Poudre d'acier utilisée dans le procédé de fabrication.

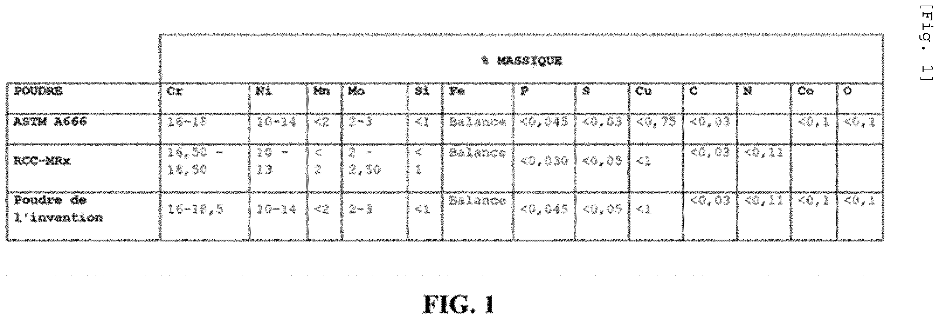

Généralement, la poudre d'acier a une composition telle que représentée sur la Figure 1, à savoir une composition massique englobant celle d'un acier répondant aux normes ASTM A666 et RCC-MRx (la norme RCC-MRx correspond aux Règles de conception et de construction des matériels mécaniques des installations nucléaires hautes températures, expérimentales et de fusion. Il s'agit d'un document technique pour la réalisation de composants pour les réacteurs nucléaires de Génération IV).

### 1.1 Caractérisation de la poudre d'acier.

### 1.1.1 Composition chimique.

Une poudre d'acier (acier 316 L de référence FE-271-3 / TruForm 316-3 - lot n° 12-034043-10 commercialisé par la Société Praxair) est analysée par microanalyse X, plus précisément par spectroscopie à rayons X par dispersion d'énergie (ou EDX selon l'acronyme anglais pour "Energy Dispersive X-ray Spectroscopy") au Microscope Électronique à Balayage (MEB)), ainsi que par spectrométrie de masse à décharge luminescente (GDMS pour "Glow Discharge Mass Spectrometry"), par spectrométrie d'émission optique avec plasma à couplage inductif (ICP-OES pour "Inductively Coupled Plasma - optical émission spectrometry" et analyse gazeuse instrumentale (IGA pour "Instrumental gas analysis").

La composition élémentaire de la matrice et des précipités de la poudre d'acier obtenue est déterminée par compilation de ces différentes mesures. Les proportions obtenues pour chaque élément chimique sont exprimées avec une incertitude relative de 3 % :
- en % massique par rapport au poids total de la matrice. Néanmoins, par convention, il est fait abstraction pour la matrice des éléments chimiques non mesurés. Il est alors considéré que le pourcentage massique restant est constitué de fer.
- en % massique et en % atomique par rapport au poids total des précipités contenus dans la poudre d'acier.

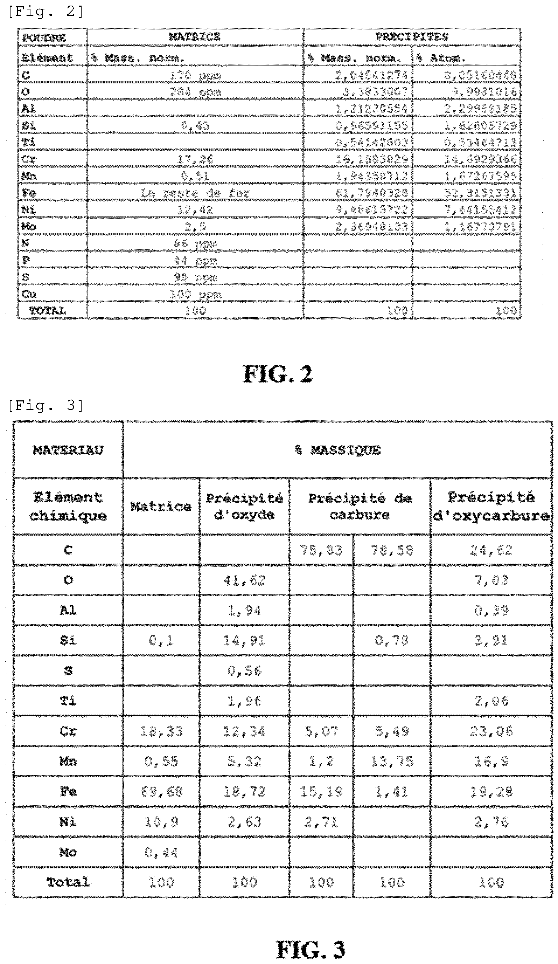

Ces proportions sont normalisées en rapportant le poids total ou le nombre total d'atomes à une valeur de 100. Elles sont reproduites dans la Figure 2 qui montre que les précipités sont riches en oxydes d'aluminium, de titane, de silicium et de manganèse sous forme d'oxyde simple et/ou d'oxyde mixte. Les précipités peuvent éventuellement contenir des carbures ou des oxycarbures de ces éléments chimiques qui n'auraient toutefois pas été détectés par MEB au vu de leur faible taille.

### 1.1.2 Morphologie.

La poudre d'acier présente une structure 100 % austénitique comme l'atteste une analyse par diffraction d'électrons rétrodiffusés (dit "EBSD" selon l'acronyme anglais pour "Electron Backscaterred diffraction").

Les particules de cette poudre comprennent des grains agglomérés afin de former des particules qui sont le plus souvent essentiellement sphériques. Elles ont un diamètre compris entre 10 µm et 100 um, et un diamètre moyen de 34 µm Plus particulièrement, les diamètres médians D₁₀, D₅₀ et D₉₀ (pour lesquels, respectivement, 10 %, 50 % et 90 % de la population des particules composant cette poudre a une taille inférieure au diamètre médian considéré) mesurés par granulométrie laser selon la norme ISO 13320 (édition 2009-12-01) sont les suivants : D₁₀ = 22 um, D₅₀ = 32 um, et D_{90 =} 48 um.

Les précipités contenus dans les particules de la poudre sont le plus souvent sphériques. Leurs dimensions maximales (qui correspond donc le plus souvent au diamètre de la particule sphérique) sont telles que la taille mesurée par imagerie au Microscope Electronique à Balayage (MEB) est généralement comprise entre 24 nm et 120 nm. Leur taille moyenne correspondante est de 63 nm.

La densité avec laquelle les précipités se répartissent dans la matrice est mesurée par comptage par imagerie MEB : elle est comprise entre 2 précipités/µm³ et 100 précipités/µm³. La densité moyenne correspondante est de 6 précipités/µm³.

### 1.1.3 Propriétés.

La densité apparente de la poudre d'acier mesurée par la norme ASTM B-212 est de 4 g/cm³ ± 0,01 g/cm³. Sa densité réelle mesurée par pycnomètre à Hélium est de 7,99 g/cm³ ± 0,03 g/cm³.

La coulabilité de Hall (capacité à faire couler 50 g de poudre à travers un orifice de dimension fixée) mesurée selon la norme ASTM B213 est supérieure à 40 secondes.

### 2. Procédé de fabrication.

Une pièce composée du matériau en acier selon l'invention est fabriquée par fabrication additive avec le procédé de fusion laser sélective sur lit de poudre (SLM en anglais pour Sélective laser Melting) avec une imprimante Trumpf modèle TruPrint Série 1000.

Pour fabriquer la pièce, sur un substrat en acier inoxydable, le balayage du laser délimite successivement plusieurs carrés de 4 mm de côté se distinguant par une direction de balayage perpendiculaire à la précédente. À l'issue de ce premier balayage, une première couche n sous forme de damier est obtenue. Après un deuxième balayage réalisé sur la couche n dans lequel une nouvelle rotation de 90° de la direction de balayage du laser est opérée, une nouvelle couche n+1 se superpose à la couche n sous-jacente.

Les principaux paramètres opératoires du procédé SLM sont les suivants :
- fibre laser Yb de longueur d'onde 1,064 nm ;
- diamètre du spot laser = 55 um ;
- puissance du laser = 150 W ;
- vitesse de balayage du laser = 675 mm/s ;
- distance entre deux traits laser successifs ("Hatching distance") = 90 um ;
- épaisseur du lit de poudre = 20 um ;
- composition du milieu gazeux de la chambre de construction = argon, avec une teneur en oxygène inférieure à 100 ppm durant la consolidation.

Cinq éprouvettes cylindriques (longueur = 40 mm et diamètre = 8 cm) construites selon les axes X et Z et cinq éprouvettes parallélépipédiques (10 mm X 10 mm X15 mm) sont obtenues. Après fabrication, les pièces sont extraites par découpe de la base des éprouvettes pour les séparer du substrat en acier inoxydable.

Les éprouvettes cylindriques sont ensuite usinées pour les essais de traction. Les éprouvettes parallélépipédiques sont utilisées pour toutes les analyses de composition et microstructure.

Aucun traitement supplémentaire n'est appliqué sur le matériau brut obtenu.

La densité du matériau en acier constituant les éprouvettes est de 7,93 g/cm³ (mesure par la méthode d'Archimède), soit une densité relative de 99,25 % en considérant une densité théorique pour un acier 316 L qui est de 7,99 g/cm³.

En modifiant au moins un des paramètres suivants, cette densité peut être augmentée jusqu'à atteindre une densité relative supérieure à 99 % sans toutefois modifier la taille des grains du matériau acier :
- puissance du laser = 50 W à 400 W ;
- vitesse de balayage du laser = 50 mm/s à 3000 mm/s.

La densité évolue généralement de façon parabolique avec la puissance du laser ou la vitesse de balayage du laser. Toutefois, une puissance ou vitesse de balayage trop faible ou trop élevée peut éventuellement diminuer la densité.

La distance entre deux traits laser successifs ("Hatching distance") est comprise par exemple entre 30 µm et 90 um.

### 3. Caractérisation du matériau en acier obtenu par le procédé de fabrication.

### 3.1.1 Composition chimique.

La composition chimique globale du matériau en acier obtenu par le procédé de fabrication décrit à l'exemple précédent est conforme aux normes ASTM A666 et RCC-MRx indiquées dans le Tableau de la Figure 1.

La composition élémentaire de cet alliage est mesurée par analyse EDX. Elle est très similaire à celle de la poudre d'acier utilisé pour fabriquer le matériau en acier. Toutefois, au sein du matériau en acier, les éléments chimiques sont répartis différemment entre la matrice et les précipités d'oxyde, de carbure ou d'oxycarbure (à savoir par exemple un mélange d'oxyde et de carbure) : leurs pourcentages massiques mesurés localement sur un ou plusieurs de ces précipités sont indiqués dans le tableau de la Figure 3 avec une incertitude relative de 3 %.

Ce tableau montre que les oxydes métalliques (sous forme d'oxyde simple et/ou d'oxyde mixte) sont riches notamment en chrome, fer et nickel, mais également aluminium, titane, silicium ou manganèse. Les carbures (sous forme de carbures simples et/ou de carbures mixtes) sont riches notamment en fer ou chrome, et dans une moindre mesure silicium ou manganèse. Les oxycarbures sont quant à eux riches en chrome, manganèse, fer, et dans une moindre mesure silicium, titane et nickel.

### 3.1.2 Morphologie.

Une analyse par diffraction d'électrons rétrodiffusés ("EBSD") montre que le matériau en acier présente une structure 100 % austénitique.

Les précipités d'oxydes, de carbures et d'oxycarbures sont incorporés dans la matrice des grains qui constituent le matériau en acier ou dans les espaces entre ces grains (joints de grains). La densité moyenne avec laquelle ces précipités se répartissent dans la matrice est de 6 précipités/µm³.

La taille moyenne des précipités d'oxyde est comprise entre 10 nm et 100 nm, celle de carbure entre 10 nm et 50 nm, celle des précipités d'oxycarbure entre 10 nm et 100 nm.

Une des particularités du matériau de l'invention est une microstructure telle que les grains qui composent ce matériau sont de structure équiaxe. En particulier, lorsque le matériau de l'invention est obtenu par fabrication additive, ses grains peuvent être équiaxes dans un plan parallèle à la direction d'une fabrication additive (ce qui correspond généralement à un plan sensiblement perpendiculaire à la direction des couches successivement obtenues lors de la fabrication).

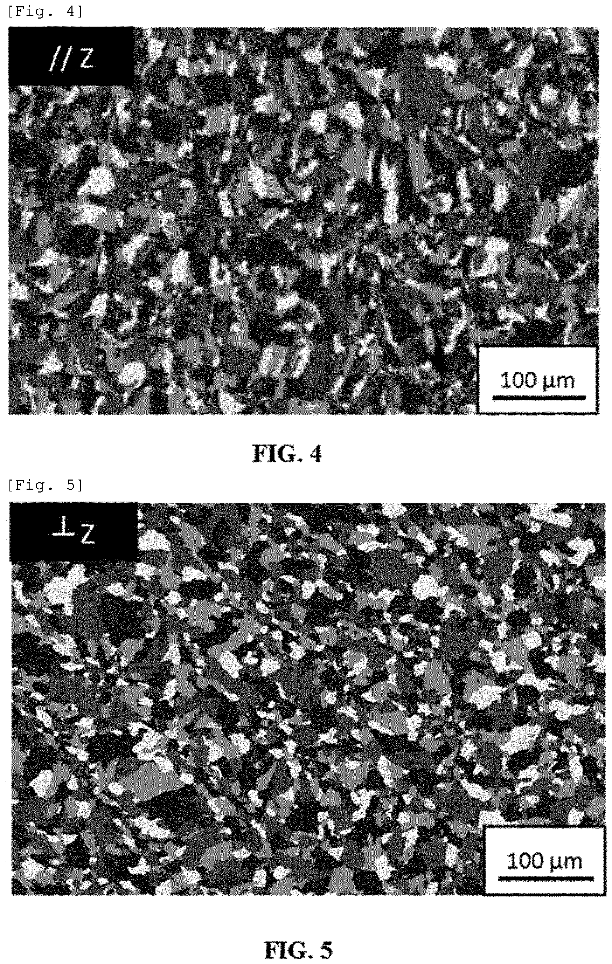

Cette particularité microstructurale du matériau de l'invention est illustrée par les Figures 4 et 5 qui montrent la structure équiaxe des grains selon un plan respectivement parallèle et un plan perpendiculaire à la direction z de fabrication additive du matériau en acier. Ces grains ont une largeur moyenne (Dmin) de 16,2 µm ± 1,5 um et une longueur moyenne (Dmax) de 20,6 um ± 1,5 um, soit un rapport moyen Dmax/Dmin de 1,34 ± 0,13.

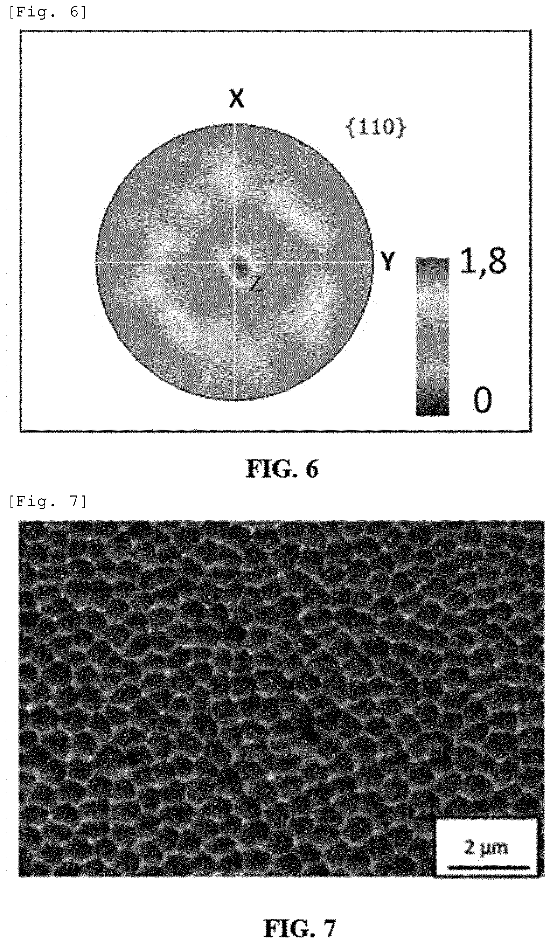

Par ailleurs, les cristallites que sont les grains du matériau en acier présentent une orientation préférentielle. Comme illustré par la Figure 6, cette texture du matériau se traduit par le fait que les directions (110) sont orientées préférentiellement parallèlement à la direction de construction Z, mais également par une intensité de texture égale à 1,9.

Comme illustré par la Figure 7, les grains du matériau en acier sont eux-mêmes constitués de cellules de taille nanométrique (plus particulièrement une taille inférieure à un diamètre moyen de 500 nm).

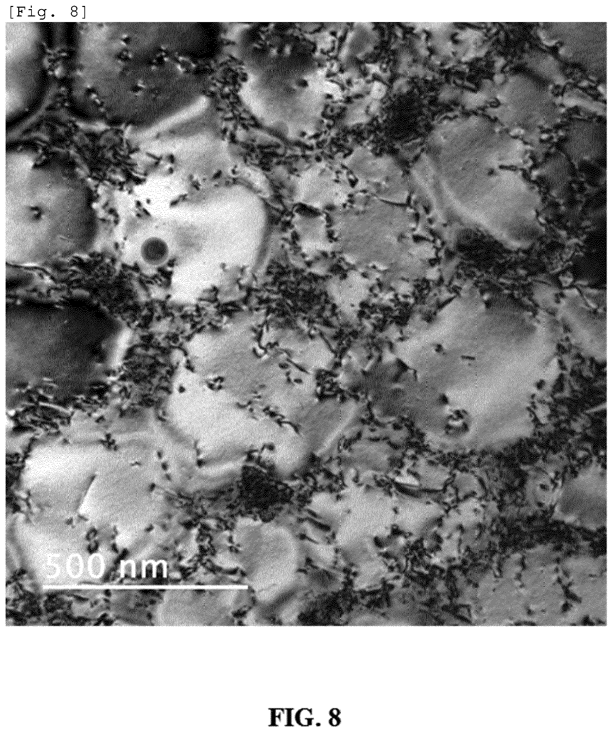

La Figure 8 illustre également cette structure cellulaire tout en faisant en outre apparaître les précipités incorporés dans la matrice qui apparaît quant à elle dans une teinte plus claire.

### 3.1.3 Propriétés.

- Les propriétés mécaniques du matériau acier sont les suivantes :
   - - microdureté Vickers HV1 (1 kg pendant 10 secondes) :
      o 202 ± 3 HV1 dans le plan parallèle à la direction Z de fabrication et 202 ± 3 HV1 dans le plan perpendiculaire à la direction Z de fabrication ;

   - essais de traction à température ambiante (25 °C) et ce quel que soit la direction de la mesure en référence à la direction Z de fabrication :
      ∘ Rm (Résistance maximale à la traction) = 645 ± 30 MPa ;
      ∘ Rp0,2 (Limite d'élasticité) = 453 ± 35 MPa ;
      ∘ A (Allongement à la rupture) = 54 ± 9 %.

Ainsi, de manière avantageuse, le matériau en acier directement obtenu à l'issue du procédé de fabrication (à savoir le matériau brut n'ayant subi aucun traitement supplémentaire tel que par exemple un traitement thermique) présente des propriétés mécaniques optimisées qui sont en outre homogènes dans toutes les directions (caractère isotrope de ces propriétés).

### 4. Procédé de traitement.

Le matériau en acier fabriqué selon l'exemple précédent est soumis au procédé de traitement comprenant une étape de compression isostatique à chaud (CIC) .

Cette étape de CIC consiste à porter, sous une atmosphère d'argon à la pression de 1800 bars, le matériau de la température ambiante (25 °C) à une température constante de 1100 °C qui est maintenue pendant 3 heures, pour ensuite revenir à la température ambiante. La vitesse de montée ou de descente en température est de 800 °C/heure.

A titre alternatif, la température constante peut être comprise 600 °C et 1400 °C.

### 5. Caractérisation du matériau en acier obtenu par le procédé de traitement.

### 5.1.1 Morphologie.

Le matériau traité ne présente plus de structure cellulaire.

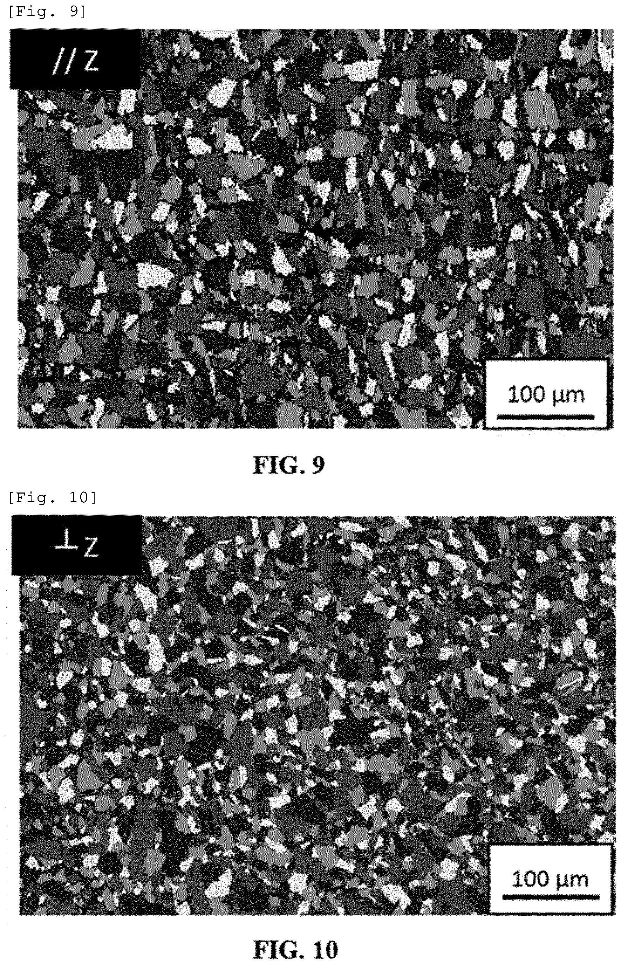

Par contre, une cartographie de phase par diffraction d'électrons rétrodiffusés ("EBSD") montre que le matériau traité présente toujours une structure 100 % austénitique, ainsi que des grains équiaxes comme illustré par les Figures 9 et 10 qui montrent la structure équiaxe des grains selon un plan respectivement parallèle et perpendiculaire à la direction z de fabrication additive du matériau en acier soumis au procédé de traitement de l'invention.

Ces grains ont une largeur moyenne de 15,9 µm ± 2,2 um et une longueur moyenne 21,5 µm ± 1,2 um, soit un rapport moyen Dmax/Dmin de 1,36 ± 0,16.

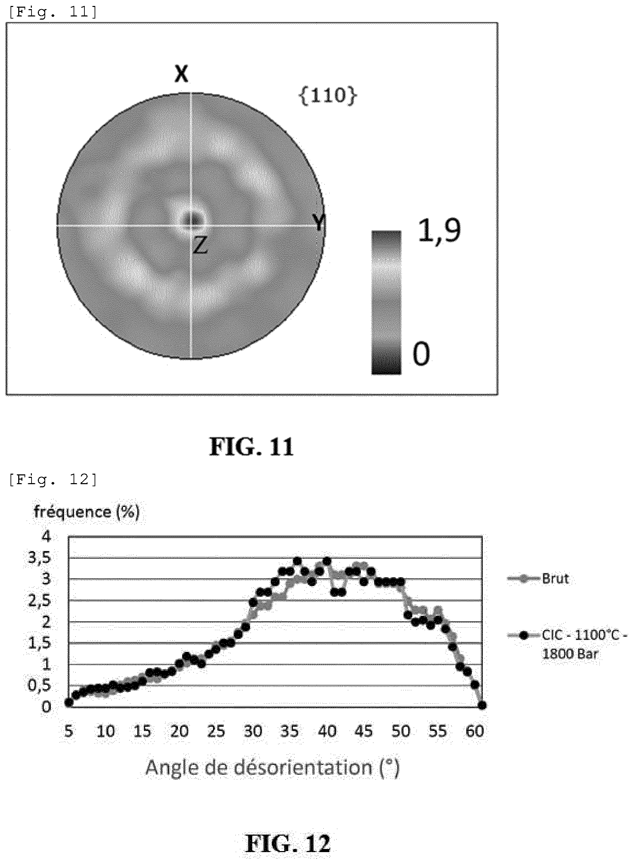

Comme illustré par la Figure 11, le matériau traité est encore structuré puisque les directions (110) sont orientées préférentiellement parallèlement à la direction de construction Z.

L'angle de désorientation entre deux joints de grains est mesuré par la technique des figures de pôles. Théoriquement, après un traitement par compression isostatique à chaud, les grains d'un matériau en acier sont supposés augmenter en taille et/ou en nombre. Cette évolution modifie alors la distribution des angles de désorientation.

Or, la Figure 12 montre que l'angle de désorientation entre les grains ne varie pas significativement après que le matériau en acier ait été traité par le procédé de traitement de l'invention. Ceci témoigne d'une absence de modification de la taille des grains.

Mis à part la structure cellulaire, ces différentes données montrent que la morphologie du matériau acier est avantageusement stable (en particulier la variation de la taille des grains est mineure), même après avoir été soumis au procédé de traitement de l'invention qui combine pourtant l'application de variations de température et de pression.

Cette stabilité de la morphologie du matériau en acier de l'invention est avantageuse par exemple lorsque l'on considère son comportement au fluage dans laquelle une contrainte en pression et/ou température est appliquée sur le matériau.

### 5.1.2 Propriétés.

Les propriétés mécaniques du matériau acier soumis au procédé traitement de l'invention sont les suivantes :
- microdureté Vickers HV1 (1 kg pendant 10 secondes) :
   o 175 ± 1,5 HV1 dans le plan parallèle à la direction Z de fabrication et 172 ± 2 HV1 dans le plan perpendiculaire à la direction Z de fabrication : la microdureté par rapport au matériau non traité a donc diminué mais est avantageusement isotrope ;
- essais de traction à température ambiante (25 °C) et ce quel que soit la direction de la mesurant référence à la direction Z de fabrication :
   ∘ Rm (Résistance maximale à la traction) = 622 ± 22 MPa ;
   ∘ Rp0,2 (Limite d'élasticité) = 336 ± 8 MPa ;
   ∘ A (Allongement à la rupture) = 76 ± 4 %.

Ces différentes propriétés mécaniques sont avantageusement isotropes, à savoir quelle que soit la direction selon laquelle elles sont mesurées. Ce comportement isotrope en traction du matériau en acier de l'invention est relativement stable au cours du temps.

La densité du matériau en acier traité constituant des éprouvettes de géométrie similaire à celles du matériau en acier brut est de 7,94 g/cm³ ± 0,05 g/cm³ (mesure par la méthode d'Archimède), soit une densité relative de 99,4 % ± 0,06 % en considérant une densité théorique pour un acier 316 L qui est de 7,99 g/cm³.

La densité du matériau en acier soumis au procédé traitement de l'invention est donc quasiment identique à celle du matériau brut correspondant.

### 6. Exemple comparatif.

À titre comparatif, une poudre d'acier de référence (poudre Stainless Steel 316L-A LMF - lot n°201600024 commercialisée par la société Trumpf) est soumise à un procédé de fabrication additive selon les paramètres opératoires de l'exemple 2 afin d'obtenir un matériau en acier massif de référence.

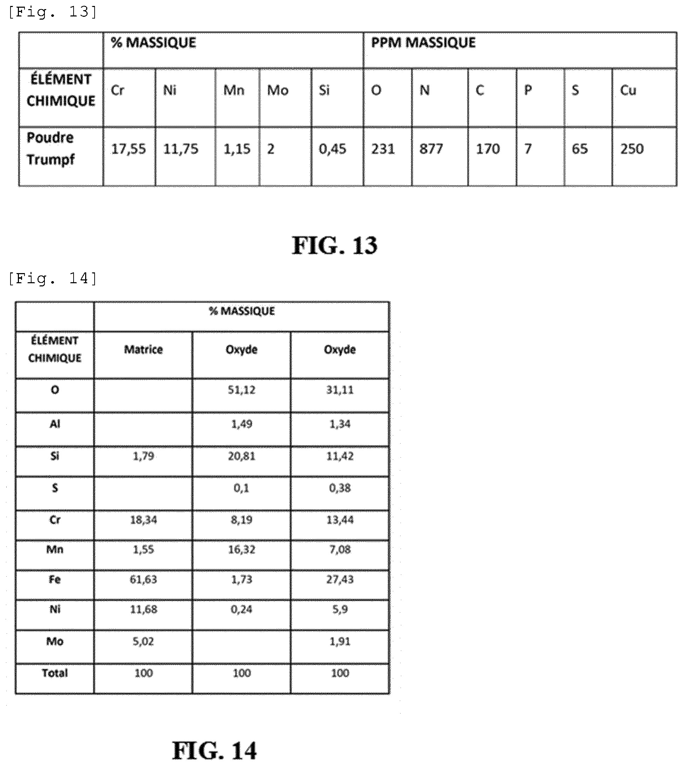

La composition chimique de cette poudre est déterminée par analyse par spectroscopie à rayons X par dispersion d'énergie (dite "EDX") réalisée au MEB, GDMS, ICP-OES et IGA, dont la compilation des mesures est illustrée par la Figure 13 et la Figure 14. L'incertitude relative de la mesure est de 3 %.

Les particules de cette poudre de référence sont essentiellement sphériques. Elles ont un diamètre compris entre 10 µm et 100 um et un diamètre moyen de 30 um. Ses diamètres médians D₁₀, D₅₀ et D₉₀ mesurés par granulométrie laser selon la norme ISO 13320 (édition 2009-12-01) sont les suivants : D₁₀ = 21 um, D₅₀ = 28 um, et D_{90 =} 39 um.

La densité apparente mesurée par la norme ASTM B-212 est de 4,39 g/cm³ ± 0,01 g/cm³. La densité réelle mesurée par pycnomètre à Hélium est de 7,99 g/cm³ ± 0,03 g/cm³.

La coulabilité de Hall (capacité à faire couler 50 g de poudre à travers un orifice de dimension fixée) mesurée selon la norme ASTM B213 est de 16 secondes. Une poudre d'acier utilisée dans le procédé de fabrication de l'invention présente par exemple une coulabilité de Hall comprise entre 30 secondes et 500 secondes.

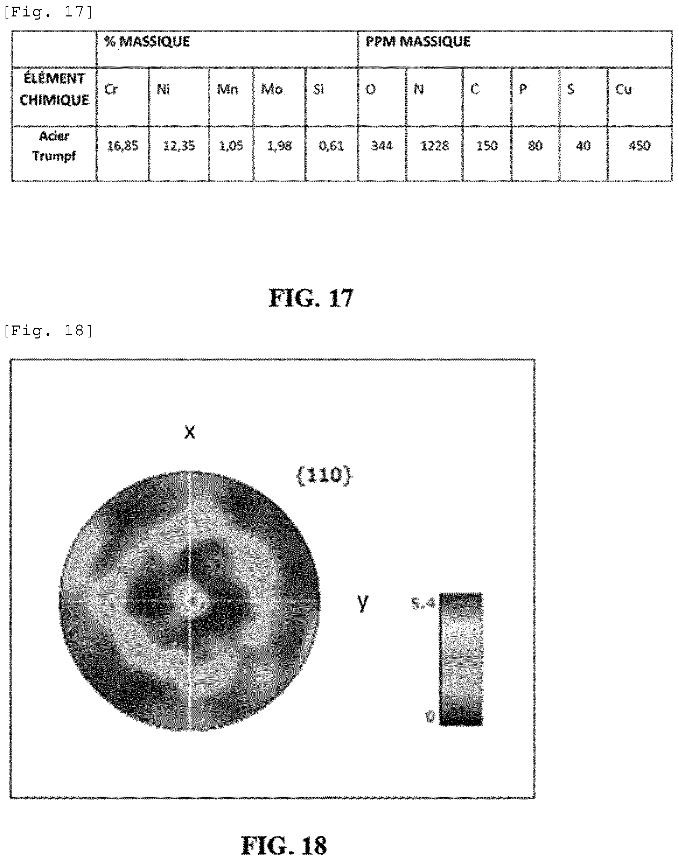

Le matériau massif de référence obtenu a une composition chimique indiquée dans la Figure 17 en pourcentage massique dans la matrice et dans deux précipités d'oxyde métallique différents.

Du point de vue de sa microstructure, le matériau massif de référence présente une structure cellulaire.

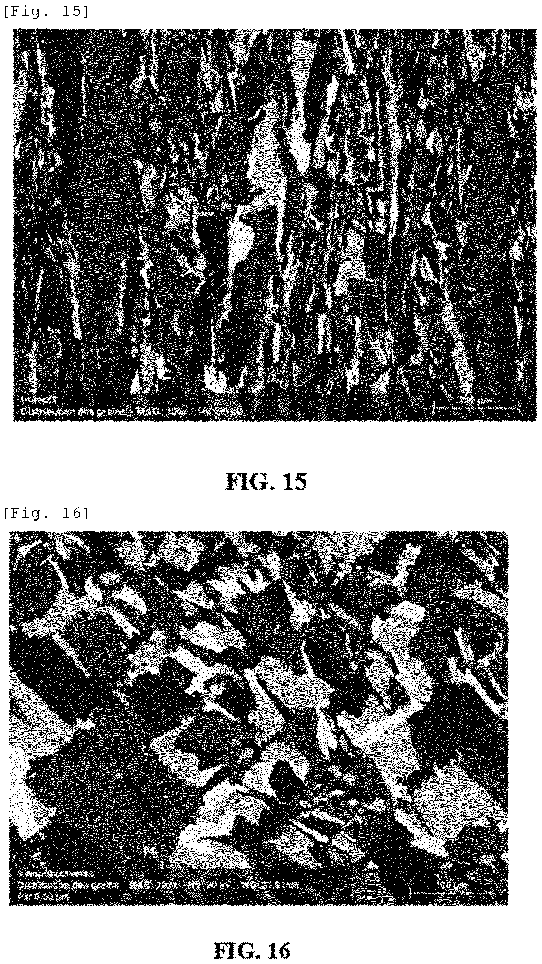

Les grains constituant ces cellules comprennent une matrice dans laquelle des précipités sont incorporés. La structure correspondante est représentée sur les clichés des Figures 15 et 16 qui montrent que la croissance axiale du matériau en acier de référence produit une structure colonnaire et donc anisotrope des grains selon un plan parallèle à la direction z de fabrication additive du matériau. Ces grains ont une largeur moyenne (Dmin) de 20,8 µm ± 2,7 um et une longueur moyenne (Dmax) de 68,6 µm ± 8,3 um, soit un rapport moyen Dmax/Dmin de 3,2 ± 0,1.

Cette caractéristique microstructurale est illustrée par la Figure 18, qui montre que le matériau en acier de référence présente une texture selon le plan (110) parallèle à la direction de construction Z se traduisant par une forte intensité de texture égale à 5,4.

Afin de comparer les propriétés liées à la microstructure du matériau en acier de référence par rapport au matériau en acier de l'invention, différents traitements sont appliqués :
- le matériau en acier de référence est soumis à un traitement de compression isostatique à chaud (noté "CIC") identique à celui de l'exemple 4 ;
- le matériau en acier de référence et le matériau en acier de l'invention sont soumis à un traitement thermique (noté "TT") consistant en un traitement dans lequel chaque matériau brut de construction est maintenu à une température de 700 °C pendant 1 heure (traitement dit de "détentionnement").

À l'issue de ces traitements, la taille moyenne des grains est mesurée par la méthode des interstices pour le matériau en acier de référence et le matériau en acier de l'invention tels qu'ils sont obtenus à l'issue :
i) du procédé de fabrication additive (brut de construction), ou
ii) du procédé de fabrication additive suivi par le traitement thermique de détentionnement ("TT"), ou
iii) du procédé de fabrication additive suivi par le traitement de compression isostatique à chaud ("CIC").

Cette taille moyenne est mesurée pour la plus grande dimension "Dmax" (longueur) ou la plus petite dimension "Dmin" (largeur) des grains constituant chaque matériau. Le rapport Dmax/Dmin correspondant est calculé afin d'évaluer le caractère équiaxe des grains de chaque matériau.

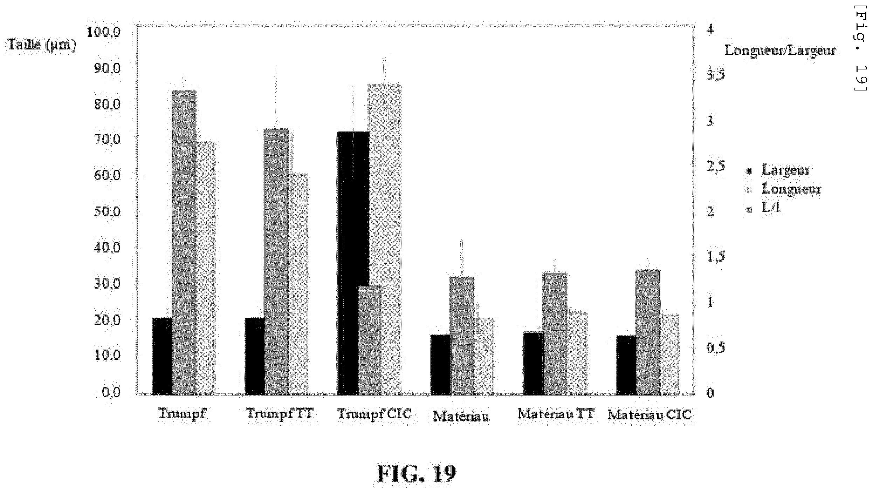

Les résultats sont présentés sur la Figure 19 qui montre que le matériau de référence en acier (noté "Trumpf") subit des modifications de la géométrie de ses grains après le traitement thermique, mais surtout après la compression isostatique à chaud. La distribution des angles de désorientation est donc modifiée pour le matériau en acier de référence.

A contrario, la microstructure du matériau en acier de l'invention (noté "Matériau") est quant à elle extrêmement stable puisqu'aucune modification substantielle de la géométrie des grains n'est constatée (en particulier la taille des grains qui reste fine, à savoir par exemple inférieure ou égale à 50 µm pour L et 1), ce qui confère une grande robustesse et une stabilité mécanique et thermique au matériau en acier de l'invention.

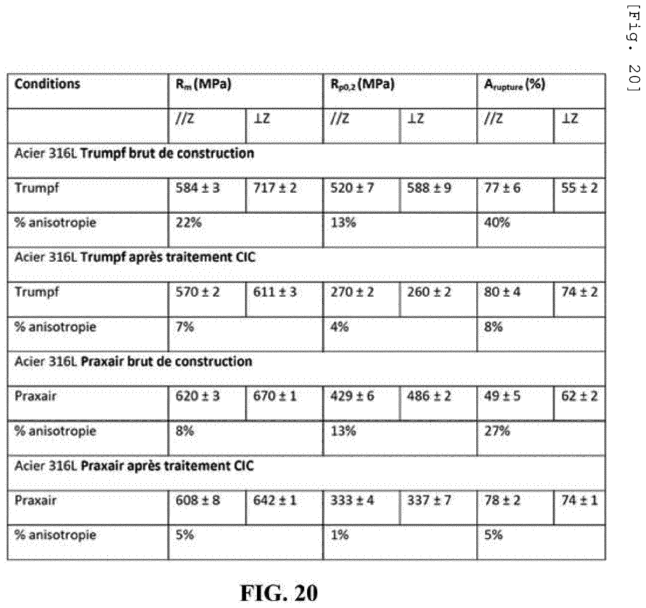

Les propriétés mécaniques du matériau en acier de l'invention "Praxair" (nouvelles mesures effectuées) et du matériau en acier de référence "Trumpf" sont mesurées avant et après avoir subi le traitement de l'invention comprenant une étape de compression isostatique à chaud (CIC). Le tableau de la Figure 20 qui en résulte regroupe les valeurs obtenues pour les paramètres Rm (Résistance maximale à la traction exprimée en Mpa), Rp0,2 (Limite d'élasticité exprimée en Mpa), A (Allongement à la rupture en %), à la fois selon une direction parallèle (//Z)) et perpendiculaire (⊥Z)) à la direction z de fabrication additive des deux matériaux. À titre complémentaire, le pourcentage d'anisotropie pour chacun de ces paramètres est indiqué : plus ce pourcentage est faible, plus les propriétés mécaniques sont isotropes, à savoir que leur valeur est homogène quelle que soit la direction de mesure.

L'analyse de la Figure 19 de la Figure 20 montre que :
- avant traitement CIC, l'anisotropie mécanique (Rm, R p0,2 et A) est moins importante pour le matériau en acier de l'invention (Praxair) que pour le matériau en acier de référence.
- après traitement CIC, l'anisotropie mécanique est fortement réduite pour les deux matériaux (Praxair et Trumpf). Toutefois, seul le matériau en acier de l'invention ne subit pas un accroissement de la taille moyenne de ces grains par phénomène de coalescence des grains. Cette taille reste stable et inférieure à 30 um malgré le traitement CIC.

En conclusion, le matériau en acier de l'invention obtenu après le traitement par CIC possède des grains équiaxes, des propriétés mécaniques isotropes, une microstructure fine (la taille moyenne des grains est généralement inférieure ou égale à 50 um, par exemple une taille moyenne "Dmax" et/ou "Dmin" comprise entre 10 µm et 50 um, voire entre 10 µm et 30 µm) et des précipités qui sont généralement de taille nanométrique (généralement comprise entre 10 nm et 100 nm).

Bien entendu, la présente invention n'est nullement limitée aux formes de réalisation décrites et représentées . La portée est définie par les revendications annexées.

## Revendications

1. Matériau en acier dont les grains qui le composent comprennent une matrice dans laquelle sont incorporés des précipités, matériau dans lequel :
i) le matériau comprend, en pourcentage en poids, les éléments suivants :
- 16 % à 20 % de chrome,
- 8 % à 14 % de nickel,
- 0,001 % à 0,030 % de carbone,
- 0,001 % à 0,050 % d'oxygène,
- 0 % à 2 % de manganèse,
- 0 % à 3 % de molybdène,
- 0 % à 1 % de silicium,
- 0 % à 0,11 % d'azote,
- 0 % à 0,045 % de phosphore,
- 0 % à 0,05 % de soufre,
- 0 % à 0,0300 % d'aluminium,
- 0 % à 2 % de manganèse,
- 0 % à 3 % de molybdène,
- 0 % à 0,003 % de vanadium,
- 0 % à 0,02 % de cobalt,
- 0 % à 0,02 % de titane,
- 0 % à 0,02 % de cuivre,
- le reste de ces éléments étant constitué de fer ;
ii) les précipités comprenant au moins un élément métallique choisi parmi un élément métallique M, un élément métallique M', un élément métallique M'' ou leurs mélanges ; les éléments métalliques étant choisis indépendamment l'un de l'autre parmi l'yttrium, le titane, le fer, le chrome, le tungstène, le silicium, le zirconium, le thorium, le magnésium, le manganèse, l'aluminium, l'hafnium, le molybdène ou leurs mélanges ;
la densité moyenne avec laquelle les précipités se répartissent dans la matrice étant comprise entre 2 précipités/µm³ et 100 précipités/µm³, ladite densité moyenne étant déterminée par comptage via une imagerie par Microscopie Electronique à Balayage ou par Microscopie Electronique à Transmission,
la microstructure de l'acier étant telle que les grains sont équiaxes et la taille moyenne des grains, mesurée selon la norme ASTM E112-10, étant telle que la moyenne de leur plus grande dimension "Dmax" et/ou la moyenne de leur plus petite dimension "Dmin" est comprise entre 10 µm et 50 µm.

2. Matériau selon la revendication 1, obtenu par fabrication additive, dans lequel les grains sont équiaxes dans un plan parallèle au plan des couches superposées du matériau qui résultent de la fabrication du matériau par un procédé de fabrication additive, de préférence les grains étant en outre équiaxes dans un plan perpendiculaire au plan des couches superposées du matériau qui résultent de la fabrication du matériau par un procédé fabrication additive.

3. Matériau selon l'une quelconque des revendications précédentes, dans lequel les grains équiaxes sont tels que le rapport moyen Dmax/Dmin entre la plus grande dimension "Dmax" et la plus petite dimension "Dmin" d'un grain est compris entre 1 et 2, le rapport moyen Dmax/Dmin étant calculé en faisant la moyenne du rapport Dmax/Dmin sur au moins 10 grains observés par imagerie Microscopie Électronique à Balayage.

4. Matériau selon l'une quelconque des revendications précédentes, dans lequel l'élément métallique M est le titane, le fer, le chrome ou leurs mélanges.

5. Matériau selon l'une quelconque des revendications précédentes, dans lequel les précipités comprennent au moins un oxyde métallique, au moins un carbure métallique, au moins un oxycarbure métallique, au moins un composé intermétallique, ou leurs mélanges ; chacun de cet oxyde, carbure, oxycarbure ou composé intermétallique comprenant au moins un élément métallique choisi parmi l'élément métallique M, l'élément métallique M', l'élément métallique M'' ou leurs mélanges.

6. Matériau selon la revendication 5, dans lequel l'oxyde métallique est choisi parmi au moins un oxyde simple MO₂₋ₓ avec l'indice X compris entre 0 et 1, au moins un oxyde mixte MM'_{y'}O_{5-x'} avec l'indice X' différent de 5 compris entre 0 et 5 et l'indice y' non nul compris entre 0 et 2, ou au moins un oxyde mixte MM'_{y'}M"_{y"}O_{5-x"} avec l'indice X'' différent de 5 compris entre 0 et 5, l'indice y' non nul compris entre 0 et 2 et l'indice y'' compris entre 0 et 2, ou les mélanges de ces oxydes, de préférence l'oxyde simple MO₂₋ₓ étant choisi parmi Y₂O₃, Fe₂O₃, Fe0, Fe₃O₄, Cr₂O₃, TiO₂, Al₂O₃, HfO₂, SiO₂, ZrO₂, ThO₂, MgO, MnO, MnO₂ ou leurs mélanges, l'oxyde simple étant de préférence TiO₂, et/ou l'oxyde mixte MM'_{y'}O_{5-x'} étant de préférence choisi parmi FeTiO₃, Y₂Ti₂O₇, YTi₂O₅ ou leurs mélanges.

7. Matériau selon l'une quelconque des revendications 5 et 6, dans lequel le carbure métallique est choisi parmi un au moins un carbure simple MC₈₋ₓ avec l'indice X différent de 8 compris entre 0 et 8, au moins un carbure mixte MM'_{y'}C_{8-x'} avec l'indice X' différent de 8 compris entre 0 et 8 et l'indice y' compris entre 0 et 5, ou les mélanges de ces carbures, le carbure simple MC₈₋ₓ étant de préférence choisi parmi TiC, SiC, AlC₃, CrC ou leurs mélanges.

8. Matériau selon la revendication 7, dans lequel le carbure mixte MM'_{y'}C_{8-x'} est choisi parmi (FeCr)₇C₃ ou (FeCr)₂₃C₆.

9. Matériau selon l'une quelconque des revendications 5 à 8, dans laquelle l'oxycarbure métallique comprend un oxyde métallique tel que défini selon la revendication 6 et un carbure métallique tel que défini selon l'une quelconque des revendications 7 et 8.

10. Matériau selon l'une quelconque des revendications 5 à 9, dans lequel le composé intermétallique est choisi parmi YFe₃, Fe₂Ti, FeCrWTi ou leurs mélanges.

11. Matériau selon l'une quelconque des revendications précédentes, dans lequel le matériau comprend 0,1 % à 1,5 % en poids de précipités.

12. Matériau selon l'une quelconque des revendications 5 à 11, dans lequel les précipités du carbure métallique ont une taille moyenne comprise entre 10 nm et 50 nm et/ou les précipités de l'oxyde métallique et/ou de l'oxycarbure métallique ont une taille moyenne comprise entre 10 nm et 100 nm, dans lequel la taille moyenne est déterminée suivant la méthode de mesure définie dans la description.

13. Matériau selon l'une quelconque des revendications précédentes, dans lequel la matrice comprend, en proportion en poids par rapport au poids du matériau, 0 ppm à 500 ppm de l'élément métallique M, de l'élément métallique M' et/ou de l'élément métallique M''.

14. Matériau selon l'une quelconque des revendications précédentes, dans lequel l'élément métallique M, M' ou M'' contenu dans la matrice est choisi parmi l'yttrium, le titane, le tungstène, le zirconium, le thorium, l'aluminium, l'hafnium, le silicium, le manganèse ou le molybdène.

15. Matériau selon l'une quelconque des revendications précédentes, dans lequel le matériau est de structure austénitique et/ou la matrice a la composition chimique d'un acier de type 316 L ou 304 L telle que spécifiée dans la norme ASTM A666.

## Patentansprüche

1. Werkstoff aus Stahl, wobei die Körner, aus denen er aufgebaut ist, eine Matrix umfassen, in die Ausscheidungen eingebaut sind, wobei bei dem Werkstoff:
i) der Werkstoff die folgenden Elemente, in Gewichtsprozent, umfasst:
- 16 % bis 20 % Chrom,
- 8 % bis 14 % Nickel,
- 0,001 % bis 0,030 % Kohlenstoff,
- 0,001 % bis 0,050 % Sauerstoff,
- 0 % bis 2 % Mangan,
- 0 % bis 3 % Molybdän,
- 0 % bis 1 % Silicium,
- 0 bis 0,11% Stickstoff,
- 0 % bis 0,045 % Phosphor,
- 0 % bis 0,05 % Schwefel,
- 0 % bis 0,0300 % Aluminium,
- 0 % bis 2 % Mangan,
- 0 % bis 3 % Molybdän,
- 0 % bis 0,003 % Vanadium,
- 0 % bis 0,02 % Cobalt,
- 0 % bis 0,02 % Titan,
- 0 % bis 0,02 % Kupfer,
- wobei die übrigen Elemente aus Eisen bestehen;
ii) wobei die Ausscheidungen mindestens ein metallisches Element umfassen, das ausgewählt ist aus einem metallischen Element M, einem metallischen Element M', einem metallischen Element M" oder ihren Mischungen; wobei die metallischen Elemente unabhängig voneinander ausgewählt sind aus Yttrium, Titan, Eisen, Chrom, Wolfram, Silizium, Zirconium, Thorium, Magnesium, Mangan, Aluminium, Hafnium, Molybdän oder ihren Mischungen;
wobei die mittlere Dichte, mit der die Ausscheidungen in der Matrix verteilt sind, zwischen 2 Ausscheidungen/µm³ und 100 Ausscheidungen/µm³ liegt, wobei die mittlere Dichte durch Zählen mithilfe einer rasterelektronenmikroskopischen oder transmissionselektronenmikroskopischen Abbildung bestimmt wird,
wobei das Stahlmikrogefüge derart vorliegt, dass die Körner gleichachsig sind und die nach der Norm ASTM E112-10 ermittelte mittlere Korngröße derart ist, dass der Mittelwert ihrer größten Abmessung "Dmax" und/oder der Mittelwert ihrer kleinsten Abmessung "Dmin" zwischen 10 µm und 50 µm liegt.

2. Werkstoff nach Anspruch 1, der durch additive Fertigung erhalten wird, wobei die Körner in einer Ebene parallel zur Ebene der übereinanderliegenden Werkstoffschichten gleichachsig sind, die Ergebnis der Fertigung des Werkstoffs mit einem Verfahren zur additiven Fertigung sind, wobei die Körner vorzugsweise ferner in einer Ebene senkrecht zur Ebene der übereinanderliegenden Werkstoffschichten gleichachsig sind, die Ergebnis der Fertigung des Werkstoffs mit einem Verfahren zur additiven Fertigung sind.

3. Werkstoff nach einem der vorhergehenden Ansprüche, wobei die gleichachsigen Körner derart sind, dass das mittlere Verhältnis Dmax/Dmin zwischen der größten Abmessung "Dmax" und der kleinsten Abmessung "Dmin" eines Korns zwischen 1 und 2 liegt, wobei das mittlere Verhältnis Dmax/Dmin berechnet wird, indem der Mittelwert des Verhältnisses Dmax/Dmin von mindestens 10 Körnern gebildet wird, die rasterelektronenmikroskopisch abgebildet wurden.

4. Werkstoff nach einem der vorhergehenden Ansprüche, wobei das metallische Element M Titan, Eisen, Chrom ist oder ihre Mischungen sind.

5. Werkstoff nach einem der vorhergehenden Ansprüche, wobei die Ausscheidungen mindestens ein Metalloxid, mindestens ein Metallcarbid, mindestens ein Metalloxycarbid, mindestens eine intermetallische Verbindung oder ihre Mischungen umfassen, wobei dieses Oxid, Carbid, Oxycarbid und diese intermetallische Verbindung jeweils mindestens ein metallisches Element umfasst, das aus dem metallischen Element M, dem metallischen Element M', dem metallischen Element M'' oder ihren Mischungen ausgewählt ist.

6. Werkstoff nach Anspruch 5, wobei das Metalloxid ausgewählt ist aus mindestens einem einfachen Oxid MO₂₋ₓ, wobei der Index X zwischen 0 und 1 liegt, mindestens einem gemischten Oxid MM'_{y'}O_{5-x'}, wobei der Index X' nicht 5 beträgt und zwischen 0 und 5 liegt und der Index y', der nicht null beträgt, zwischen 0 und 2 liegt, oder mindestens einem gemischten Oxid MM'MM"_{y"}O_{5-x"}, wobei der Index X" nicht 5 beträgt und zwischen 0 und 5 liegt und der Index y', der nicht null beträgt, zwischen 0 und 2 liegt, und der Index y'' zwischen 0 und 2 liegt, oder Mischungen aus diesen Oxiden, wobei das einfache Oxid MO₂₋ₓ vorzugsweise ausgewählt ist aus Y₂O₃, Fe₂O₃, FeO, Fe₃O₄, Cr₂O₃, TiO₂, Al₂O₃, HfO₂, SiO₂, ZrO₂, ThO₂, MgO, MnO, MnO₂ oder aus ihren Mischungen, wobei das einfache Oxid vorzugsweise TiO₂ ist und/oder das gemischte Oxid MM'_{y'}O_{5-x'} vorzugsweise ausgewählt ist aus FeTiO₃, Y₂Ti₂O₇, YTi₂O₅ oder ihren Mischungen.

7. Werkstoff nach einem der Ansprüche 5 und 6, wobei das Metallcarbid ausgewählt ist aus mindestens einem einfachen Carbid MC₈₋ₓ, wobei der Index X nicht 8 beträgt und zwischen 0 und 8 liegt, mindestens einem gemischten Carbid MM'_{y'}MC_{8-x'}, wobei der Index X' nicht 8 beträgt und zwischen 0 und 8 liegt und der Index y' zwischen 0 und 5 liegt, oder aus Mischungen aus diesen Carbiden, wobei das einfache Carbid MC₈₋ₓ vorzugsweise ausgewählt ist aus TiC, SiC, AlC₃, CrC oder ihren Mischungen.

8. Werkstoff nach Anspruch 7, wobei das gemischte Carbid MM'_{y'}MC_{8-x'} ausgewählt ist aus (FeCr)₇C₃ oder (FeCr)₂₃C₆.

9. Werkstoff nach einem der Ansprüche 5 bis 8, wobei das Metalloxycarbid ein Metalloxid nach Anspruch 6 und ein Metallcarbid nach einem der Ansprüche 7 und 8 umfasst.

10. Werkstoff nach einem der Ansprüche 5 bis 9, wobei die intermetallische Verbindung ausgewählt ist aus YFe₃, Fe₂Ti, FeCrWTi oder ihren Mischungen.

11. Werkstoff nach einem der vorhergehenden Ansprüche, wobei der Werkstoff 0,1 Gewichts-% bis 1,5 Gewichts-% Ausscheidungen umfasst.

12. Werkstoff nach einem der Ansprüche 5 bis 11, wobei die Ausscheidungen aus einem Metallcarbid eine mittlere Größe zwischen 10 nm und 50 nm aufweisen und/oder die Ausscheidungen aus einem Metalloxid und/oder aus einem Metalloxycarbid eine mittlere Größe zwischen 10 nm und 100 nm aufweisen, wobei die mittlere Größe dem in der Beschreibung definierten Messverfahren entsprechend bestimmt wird.

13. Werkstoff nach einem der vorhergehenden Ansprüche, wobei die Matrix als Gewichtsprozentanteil bezogen auf das Gewicht des Werkstoffs 0 ppm bis 500 ppm des metallischen Elements M, des metallischen Elements M' und/oder des metallischen Elements M" umfasst.

14. Werkstoff nach einem der vorhergehenden Ansprüche, wobei das metallische Element M, M' oder M'', das in der Matrix enthalten ist, ausgewählt ist aus Yttrium, Titan, Wolfram, Zirconium, Thorium, Aluminium, Hafnium, Silizium, Mangan oder Molybdän.

15. Werkstoff nach einem der vorhergehenden Ansprüche, wobei der Werkstoff ein austenitisches Gefüge aufweist und/oder die Matrix die chemische Zusammensetzung eines Stahls der Sorte 316 L oder 304 L laut Spezifikation der Norm ASTM A666 aufweist.

## Claims

1. Steel material, for which the grains of which it is composed comprise a matrix in which precipitates are incorporated, in which material:
i) the material comprises, as percentage by weight, the following elements:
- from 16% to 20% of chromium,
- from 8% to 14% of nickel,
- from 0.001% to 0.030% of carbon,
- from 0.001% to 0.050% of oxygen,
- from 0% to 2% of manganese,
- from 0% to 3% of molybdenum,
- from 0% to 1% of silicon,
- from 0% to 0.11% of nitrogen,
- from 0% to 0.045% of phosphorus,
- from 0% to 0.05% of sulfur,
- from 0% to 0.0300% of aluminium,
- from 0% to 2% of manganese,
- from 0% to 3% of molybdenum,
- from 0% to 0.003% of vanadium,
- from 0% to 0.02% of cobalt,
- from 0% to 0.02% of titanium,
- from 0% to 0.02% of copper,
- the balance of these elements consisting of iron;
ii) the precipitates comprise at least one metal element chosen from a metal element M, a metal element M', a metal element M" or their mixtures; the metal elements being chosen, independently of one another, from yttrium, titanium, iron, chromium, tungsten, silicon, zirconium, thorium, magnesium, manganese, aluminium, hafnium, molybdenum or their mixtures;
the mean density with which the precipitates are distributed in the matrix being of between 2 precipitates/µm³ and 100 precipitates/µm³, said mean density being determined by counting via imaging by Scanning Electron Microscopy or by Transmission Electron Microscopy,
the microstructure of the steel being such that the grains are equiaxial and the mean size of the grains, measured according to Standard ASTM E112-10, being such that the mean of their greatest dimension "Dmax" and/or the mean of their smallest dimension "Dmin" is of between 10 µm and 50 pm.

2. Material according to Claim 1, obtained by additive manufacturing, in which the grains are equiaxial in a plane parallel to the plane of the superimposed layers of the material which result from the manufacture of the material by an additive manufacturing process, the grains preferably being in addition equiaxial in a plane perpendicular to the plane of the superimposed layers of the material which result from the manufacture of the material by an additive manufacturing process.

3. Material according to either one of the preceding claims, in which the equiaxial grains are such that the mean ratio Dmax/Dmin between the greatest dimension "Dmax" and the smallest dimension "Dmin" of a grain is of between 1 and 2, the mean ratio Dmax/Dmin being calculated by taking the mean of the ratio Dmax/Dmin over at least 10 grains observed by Scanning Electron Microscopy imaging.

4. Material according to any one of the preceding claims, in which the metal element M is titanium, iron, chromium or their mixtures.

5. Material according to any one of the preceding claims, in which the precipitates comprise at least one metal oxide, at least one metal carbide, at least one metal oxycarbide, at least one intermetallic compound, or their mixtures; each of this oxide, carbide, oxycarbide or intermetallic compound comprising at least one metal element chosen from the metal element M, the metal element M', the metal element M'' or their mixtures.

6. Material according to Claim 5, in which the metal oxide is chosen from at least one simple oxide MO₂₋ₓ with the index X of between 0 and 1, at least one mixed oxide MM'_{y'}O_{5-x'} with the index X' other than 5 of between 0 and 5 and the non-zero index y' of between 0 and 2, or at least one mixed oxide MM'_{y'}M"_{y"}O_{5-x"} with the index X' ' other than 5 of between 0 and 5, the non-zero index y' of between 0 and 2 and the index y'' of between 0 and 2, and the mixtures of these oxides, preferably the simple oxide MO₂₋ₓ being chosen from Y₂O₃, Fe₂O₃, FeO, Fe₃O₄, Cr₂O₃, TiO₂, Al₂O₃, HfO₂, SiO₂, ZrO₂, ThO₂, MgO, MnO, MnO₂ or their mixtures, the simple oxide preferably being TiO₂, and/or the mixed oxide MM'_{y'}O_{5-x'} preferably being chosen from FeTiO₃, Y₂Ti₂O₇, YTi₂O₅ or their mixtures.

7. Material according to either one of Claims 5 and 6, in which the metal carbide is chosen from at least one simple carbide MC₈₋ₓ with the index X other than 8 of between 0 and 8, at least one mixed carbide MM'_{y'}C_{8-x'} with the index X' other than 8 of between 0 and 8 and the index y' of between 0 and 5, or the mixtures of these carbides, the simple carbide MC₈₋ₓ preferably being chosen from TiC, SiC, AlC₃, CrC or their mixtures.

8. Material according to Claim 7, in which the mixed carbide MM'_{y'}C_{8-x'} is chosen from (FeCr)₇C₃ or (FeCr)₂₃C₆.

9. Material according to any one of Claims 5 to 8, in which the metal oxycarbide comprises a metal oxide as defined according to Claim 6 and a metal carbide as defined according to either one of Claims 7 and 8.

10. Material according to any one of Claims 5 to 9, in which the intermetallic compound is chosen from YFe₃, Fe₂Ti, FeCrWTi or their mixtures.

11. Material according to any one of the preceding claims, in which the material comprises from 0.1% to 1.5% by weight of precipitates.

12. Material according to any one of Claims 5 to 11, in which the precipitates of the metal carbide have a mean size of between 10 nm and 50 nm and/or the precipitates of the metal oxide and/or of the metal oxycarbide have a mean size of between 10 nm and 100 nm, in which the mean size is determined according to the measurement method defined in the description.

13. Material according to any one of the preceding claims, in which the matrix comprises, as proportion by weight with respect to the weight of the material, from 0 ppm to 500 ppm of the metal element M, of the metal element M' and/or of the metal element M".

14. Material according to any one of the preceding claims, in which the metal element M, M' or M" contained in the matrix is chosen from yttrium, titanium, tungsten, zirconium, thorium, aluminium, hafnium, silicon, manganese or molybdenum.

15. Material according to any one of the preceding claims, in which the material is of austenitic structure and/or the matrix has the chemical composition of a steel of 316L or 304L type as specified in Standard ASTM A666.
